# EUROPEAN PATENT SPECIFICATION

(11) **EP 0 505 378 B1**
(45) Date of publication and mention of the grant of the patent: **03.01.2001**
(21) Application number: 90917099.5
(22) Date of filing: 20.07.1990
(51) Int. Cl.: A01N 25/02

(54) **DELIVERY SYSTEM FOR AGRICULTURAL CHEMICALS**
SYSTEM ZUR AUSBRINGUNG LANDWIRTSCHAFTLICHER CHEMIKALIEN
SYSTEME DE DISTRIBUTION POUR PRODUITS CHIMIQUES DESTINES A L'AGRICULTURE

(30) Priority: 11.12.1989 US 448707; 05.04.1990 US 505030; 28.06.1990 US 546014
(43) Date of publication of application: 30.09.1992
(73) Proprietor: ISP INVESTMENTS INC., Wilmington, Delaware 19801 (US)
(72) Inventor: NARAYANAN, Kolazi, S., Palisades Park, NJ 07650 (US); CHAUDHURI, Ratan, K., Butler, NJ 07405 (US); DAHANAYAKI, Manilal, Wayne, NJ 07470 (US)
(74) Representative: Ford, Michael Frederick
(86) International application number: PCT/US90/04127
(87) International publication number: WO 91/08665

(56) References cited:
- EP-A- 0 391 168
- WO-A-88/00184
- US-A- 4 840 663
- US-A- 4 960 771
- US-A- 4 968 344
- RESEARCH DISCLOSURE vol. 308, 10 December 1989, HAVANT GB pages 981 - 982 R.CURTIS 'Stable Pesticidal Emulsions' Disclosure number 308103
- CHEMICAL ABSTRACTS, Volume 75, No. 17 issued 25 October 1971, HALLIDAY, "Solvent system for formulating Pesticides", see Abstract No. 109261K, South African Patent 69 05,393.
- CHEMICAL ABSTRACTS, Volume 78, No. 13 issued 02 April 1973, OST et al., "Solution concentrates of fungicidal and acaricidal diamino compounds", see Abstract No. 80918d, West German Patent 2,128,225.
- CHEMICAL ABSTRACTS, Volume 111, No. 13 issued 25 September 1989, BOYD et al., "Liquid low and ultra-low volume pesticide formulation", see Abstract No. 111041u, Austrialian Patent 580,540.

## Description

### BACKGROUND OF THE INVENTION

### I. Field of the Invention

The invention relates to a delivery system for agriculturally active chemicals. More particularly, the invention relates to an emulsifiable concentrate of difficult to dissolve agricultural chemicals.

### II. Description of the Prior Art

Agricultural chemicals are most preferably applied in the form of aqueous emulsions, solutions, or suspensions. Occasionally, they may also be applied in the form of a dust wherein the active ingredient is adsorbed onto or mixed with a finely divided inert carrier material, such as, china clay, or the like. With such powdered or dust compositions, drift due to wind is a problem and consequently, liquid formulations are preferred.

One of the problems with such liquid formulations is the fact that chemicals having agricultural activity often exhibit extreme insolubility in water. This results in their having to be dissolved either in organic solvents or utilized in the form of emulsions or suspensions. With respect to the use of organic solvents, these are generally disadvantageous from an environmental and cost viewpoint. Particularly, such organic chemicals may exhibit toxicity or side-effects which may be adverse to the effect of the agricultural chemical itself or to the subsequent fruit or vegetable produced in the particular agricultural use. vegetable produced in the particular agricultural use. This toxicity may also be disadvantageous with respect to handling.

When attempts are made to provide emulsified or suspension formulations, difficulties are encountered with respect to providing a desirably high concentration of the agriculturally active ingredient. Thus, when such agriculturally active chemicals are formulated into an emulsion, it is difficult to maintain the emulsified state. This makes it difficult to maintain a uniform formulation, particularly, when the formulation is diluted with water for application to the plants.

Typically, for example, the agriculturally active ingredient is mixed with one or more of a variety of conventional solvents and an emulsifying agent to form a concentrate. This concentrate may be an emulsion, suspension, or solution. The concentrate is then stored until it is transported to the site of use or may simply be transported and stored at the site of use. In any event, the concentrate normally will undergo some period of storage until it is ready for use. Understandably, it is most desirable to be able to transport the agriculturally active ingredient at the highest concentration possible so as to minimize the volume of material which need be transported. By the same token, however, at the use site, it is normally not feasible to admix ingredients together or to process them other than to dilute the concentrate with water. Accordingly, it is important that the concentrate emulsify easily, i.e., exhibit good "bloom", upon the addition of water. In addition, at the use site, it is often necessary to store the diluted concentrate for extended time periods until the actual application to the plants. Consequently, it is important that the diluted form of the concentrate exhibit good stability with respect to the uniformity of the emulsion and to avoid precipitation of the active ingredients. If non-uniformity or precipitation occurs in the diluted form, then non-uniformity will result in the application of the diluted formulation to the plants.

An attempt to provide concentrates of agriculturally useful chemicals is disclosed in South African Patent Application No. 695,393, filed July 25, 1969. This application is directed to the formulation of a concentrate substantially water-insoluble pesticides for agricultural use. The pesticides, either in oil or solid form, are mixed with pyrrolidones having a hydrogen or a lower alkyl group containing from 1 to 4 carbon atoms attached to the nitrogen atom of the pyrrolidone ring. The application discloses that concentrated solutions of difficult to dissolve pesticides could be formulated and that such concentrates exhibited good stability. The concentrates utilized are those containing the pesticidal active ingredient, the particular lower alkyl pyrrolidone, a cosolvent which is usually a common organic solvent, such as, an aromatic including xylene, methylated and polyalkylated naphthalenes and aliphatic solvents, and a dispersing or emulsifying agent, such as, a surfactant, including polyoxyethylene alkylphenols, polyoxyethylene fatty esters, polyoxyethylene sorbitan fatty esters which may be blended with oil-soluble sulfonates, calcium and aminosulfonate salts, and the like.

This prior art does not offer a solution to the problem arising from the difficulty in maintaining the stability of the emulsion after the concentrate is diluted with water. Consequently, unless the diluted form of the concentrate is used immediately after emulsification, it is difficult to provide a stable diluted formulation for application to the plants.

U.S. Patent No. 4,798,837 discloses an emulsifiable concentrate of the pesticidal compound (CGA):

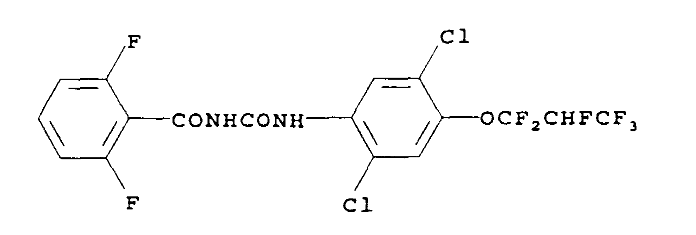

This active concentrate contains 10% of the active ingredient using 30% cyclohexanone as the solvent. However, cyclohexanone is highly toxic.

For agricultural uses, it is desirable to avoid the use of toxic solvents, as well as to increase the amount of the agriculturally active material in the concentrate. Moreover, many organic solvents which have been used in the past, even those exhibiting relatively low toxicities, are not biodegradable and thus remain as a pollutant.

The journal "Research Disclosure", Vol 308, December 1989, disclosure number 308103, teaches a stable emulsifiable concentrate comprising:
a) from 1 to 20% by weight of a difficult-to-dissolve crystalline compound especially a pesticide;
b) from 45 to 90% by weight of 1-n-octyl-2-pyrrolidone;
c) from 5 to 30% by weight of 1-methyl-2-pyrrolidone, cyclohexanone or gamma-butyrolactone;
d) from 10 to 50% by weight of methylated naphthalene, a xylene range aromatic solvent or a mixture of two or more such xylene range aromatic solvents; and
e) from 1 to 10% by weight of a surfactant.

This document was published on or after 11th December 1989.

EP-A-391168 which is a prior document only by reason of Article 54(3) EPC discloses that N-alkyl lactams including N-octylpyrrolidone and N-dodecylpyrrolidone can be utilised in aqueous spray liquors containing certain fungicides. These alkylpyrrolidones are said to prevent crystallization. The compositions may contain a solvent. In the examples the compositions contain cyclohexanone as the solvent and also contain an emulsifier.

WO88/00184 discloses N-alkyl lactams including N-octyl and N-dodecylpyrrolidone; these are used for a variety of purposes. The document includes examples of emulsifiable concentrates containing N-octyl- or N-dodecylpyrrolidone. Some examples include surfactant and butyl cellosolve.

DE-A-2128225 teaches that N-methyl pyrollidone or dimethylformamide can be used as solvents for the preparation of emulsifiable concentrates.

### SUMMARY OF THE INVENTION

We have discovered a novel emulsifiable concentrate of an agriculturally active chemical which is substantially insoluble in water, which concentrate provides, upon dilution, a highly stable emulsion and avoids precipitation of the active ingredient on extended storage. In addition, the inventive emulsifiable concentrates may contain relatively high concentrations of the agriculturally active ingredient, sometimes referred to as a "loading", making it advantageous from both economic and handling viewpoints. Also, the concentrates of the present invention utilize organic materials which do not pose environmental problems either in use or handling.

More particularly, in one embodiment, the emulsifiable concentrate of the present invention is composed of an agriculturally active chemical which is substantially insoluble in water, a surfactant, an organic diluent and a solvent having a first component and a second component, the second component being a hydrophobic solvent having an HLB value from 2 to 8 and the first component having a sufficiently high hydrophilic property and being present in an amount to solubilize the agriculturally active chemical in the concentrate,
the first component having the following Hansen's solvent parameters:
Dispersive component from about 40 to 50%;
Polar components of from about 25 to 40%; and
H-bonding component of 10 to 30%;
and the second component having the following Hansen's solubility parameters:
Dispersive component from about 56 to 75%;
Polar component from about 8 to 24%; and
H-bonding component of from about 10 to 30%.

The second component may be a non-ionic surfactant. Preferably the first and second components are biodegradable.

Preferably the first and second components are each at least 5% based on the weight of the concentrate.

For a discussion of the solubility parameters, see C.R.C. Handbook of Solubility Parameters and Other Cohesion Parameters, Allan F.M. Barton, 1983, Table 9, p. 167-170.

The organic diluent may be an oil having a fractional dispersive solubility parameter of greater than 70% and a molar volume of greater than 90 cm³/mole.

This invention also includes a process for forming an emulsifiable concentrate, comprising mixing an agriculturally active chemical which is substantially insoluble in water with a surfactant, an organic diluent and a solvent composed of first and second components, the second component being a hydrophobic solvent having an HLB value from 2 to 8, and the first component having a sufficiently high hydrophilic property and being present in an amount to solubilize the agriculturally active chemical in the concentrate, the Hansen's solvent parameters of the components being as specified above.

### DESCRIPTION OF THE PREFERRED EMBODIMENT

As used herein, the term "agriculturally active chemical" includes compounds and mixtures thereof which can be used as agricultural fertilizers, nutrients, plant growth accelerants, herbicides, plant growth controlling chemicals, and chemicals which are effective in killing plants, insects, microorganisms, fungi, bacteria and the like which are commonly referred to as insecticides, bactericides, fungicides, nematocides, fumigants, and the like, as well as any other chemicals having properties which are suitable for agricultural uses in terms of application to plants or domestic uses for controlling insects and pests. Particularly, such chemicals would normally take the form of water-immiscible or oily liquids and/or solids which are substantially insoluble in water. By the term "substantially insoluble", it is meant that for all practical purposes, the solubility of the compound in water is insufficient to make the compound practicably usable in an agricultural end use without some modification either to increase its solubility or dispersability in water, so as to increase the compound's bioavailability or avoid the use of excessively large volumes of solvent.

Suitable agriculturally active chemicals which can be used with the present invention include insecticides, such as, cyclocompounds, carbamates, animal and plant derivatives, synthetic pyrethroids, diphenyl compounds, non-phosphates, organic phosphates, thiophosphates, and dithiophosphates. (See Agricultural Chemicals, Book I, Insecticides, 1989 Revision by W.T. Thomson, Thomson Publications.) Typical of the insecticides are:
- cyclocompounds:: 6,7,8,9,10,10-hexachloro-1,5,5a,6,9,9a-hexahydro-6,9-methano-2,4,3-benzodioxathiepin-3-oxide
- carbamates:: 2-isopropyl phenyl-N-methyl carbamate;
2-(1,3-dioxolan-2yl) phenylmethyl carbamate;
2,3-isopropylidine dioxyphenyl methyl carbamate;
- animal and plant derivatives:: chlorinated hydrocarbons derived from Southern pine; naturally occuring lactone glycoside;
- synthetic pyrethroids:: (±) α-cyano-3-phenoxybenzyl (±) cis, trans 3-(2,2-dichlorovinyl)-2,2-dimethyl cyclopropane carboxylate;
(±) cyano (3-phenoxyphenyl methyl (±)-4-(difluoromethyoxy) α-(1-methylethyl) benzene acetate;
- phenoxy compounds and non-phosphates:: 2,2-bis(p-methoxy phenyl)-1,1,1,trichloroethane;
1,3,5,tri-n-propyl-1,3,5-triazine-2,4,6 (1H,3H,5H) trione;
ethyl (2E, 4E)-3,7,11-trimethyl-2,4-dodecadienoate;
1-decycloxy 4-[(7-oxa-oct-4-ynyl)]-oxybenzene;
- organic phosphates:: dimethyl phosphate ester of 3-hydroxy-N,N-dimethyl-cis-crotonamide;
2-chloro-1-(2,4-dichloro phenyl) vinyl diethylphosphate;
4-(methyl thio) phenyl dipropyl phosphate;
- thiophosphates:: O,O-diethyl-O-4-nitrophenyl phosphorothioate;
O,O-diethyl-O-(2,isopropyl-6-methyl-5-pyrimidinyl) phosphorothioate;
2-diethylamino-6-methyl pyrimidine-4-yl dimethyl phosphorothioate;
- dithiophosphates:: 0,0-dimethyl phosphorodithioate ester of diethylmercapto succinate;
0-ethyl-S-phenyl ethyl phosphorodithioate.

Typical herbicides include phenoxy compounds, benzoic, acetic, and phthalic acids, aniline derivatives, nitriles, amides, acetamides, anilides, carbamates, thiocarbamates, and heterocyclic nitrogen derivatives, e.g., triazines, pyridines, pyridazones, picolinic acid, and urea derivates and phosphates. (See Agricultural Chemicals, Book II, Herbicides, 1986-87 Edition, W.T. Thomson, Thomson Publications, Fresno, CA 93791.) Exemplary of the above compounds are:
- phenoxy compounds:: 2,4-Dichlorophenoxy acetic acid 2,4,5-trichloro phenoxyacetic acid;
4-(2,4-dichlorophenoxy) butyric acid;
S-ethyl 2 methyl-4-chlorophenoxythioacetate;
2-methyl-4-chloro-phenoxy acetic acid;
methyl 5-(2,4-dichloro-phenoxy)-2-nitrobenzoate;
- benzoic and acetic acids of phthalic compounds:: 3,6-dichloro-o-anisic acid 4-chloro-2-oxo benzothiazolin-3-yl acetic acid;
N-1-Naphthyl-phthalamic acid;
- nitriles and aniline derivatives:: 3-5-dibromo-4-hydroxybenzonitrile;
α,α,α,trifluoro-2,6-dinitro-N, N-dipropyl-p-tolinidine;
N-(1-ethylpropyl)-2,6-dinitro-3,4-xylidine;
- amides, acetamides, anilides:: N,N-diethyl-2-(1-naphthalenyl oxy)-propionamide;
2,6-dimethyl-N-2' methoxy-ethylchloro-acetanilide;
3',4'-dichloro-propionanilide;
α-chloracetic-N-(3,5,5-trimethylcyclohexen-1-yl)-N-isopropylamide;
4-benzyl-N-isopropyl trimethyl acetamide;
- thiocarbamates:: S-Ethyl dipropyl thiocarbamate;
- urea derivatives:: 3-(5-tert-butyl-3-isoxazoyl)-1,1-dimethyl urea;
N-(2,6-trifluoro-benzoyl)-N'-[2,5-- dichloro-4-(1,1,2,3,3,3-hexafluoropropyloxy) phenyl] urea;
- pyrrolidone derivatives:: 1-(m-trifluoro methyl phenyl)-3-chloro-4-chloromethyl-2-pyrrolidone;
- amino acid derivatives:: methyl N-benzoyl-N-(3-chloro-4-fluorophenyl)-DL alarinate;
N-chloroacetyl-N-(2,6-diethyl phenyl)-glycine ethyl ester;
- carbamates:: Isopropyl-m-chlorocarbanilate;
3-Ethoxy (carbonyl aminophenyl)-N-phenyl carbamate;
- heterocyclics:: 4-amino-3,5-dichloro-6-fluoro-2-pyridyloxy acetic acid;
4-(1,2-Dimethyl-N-propyl amino)-2-ethyl amino-6-methyl thio-S-triazine;
2-[4,5-dihydro 4-methyl-4-(1-methyl ethyl)-5-oxo-1H-imidazoyl-2yl-3-byridinecarboxylic acid;
2-[3,5-dichlorophenyl)-2-(2,2,2-trichloroethyl) oxinane;
Butyl-9-hydro-fluorene-(9)-carboxylate;
2-[1-(ethoxy imino) butyl]-3-hydroxy-5-(2H-tetra hydro thiopyran-3-yl)-2-cyclohexene-ione;
2-(2 chlorophenyl) methyl-4,4-dimethyl-3-iso oxazolidinone;
- phosphates:: 0-ethyl-0-(3-methyl-6-nitro phenyl) N-sec-butyl phosphoro thio amidate;
- other:: N³,N³, di-N-propyl-2,3-dinitro-6-trifluoromethyl-M-phenylenediamine (PRO).

Typical fungicides include (See Agricultural Chemicals, Book IV, Fungicides, 1989 Revision, W.T. Thomson, Thomson Publications, Fresno, CA 93791):
- organic compounds:: 2,5-dimethyl-N-Cyclohexyl-N-methoxy-3-furan carboxamide;
5-Ethyoxy-3-trichloromethyl-1,2,4-thiadiazole;
3-(2-methyl piperidino) propyl 3,4-dichlorobenzoate;
N,N'-(1,4-piperazinediyl bis (2,2,2-trichloro) ethylidene) bis formamide;
Tetramethyl thiuram disulfide;
0-Ethyl-S,S,diphenyl-dithiophosphate;
5,10-dihydro-5,10-dioxo naphtho (2,3,9)-p-dithiin-2,3-dicarbonitrile;
2-(Thiocyano methyl thio) benzothiazole;
α-2-(4-chlorophenyl) ethyl]-α-(1,1-dimethyl ethyl)-1H-1,2,4-triazole-1-ethanol;
- morpholines:: N-tridecyl-2,6-dimethyl morpholine;
4-N-dodecyl-2,6-dimethyl morpholine;

Typical fumigants, growth regulators, repellants, and rodenticides include (See Agricultural Chemicals, Book III, Fumigants, 1988-1989 Revision, W.T. Thomson, Thomson Publications, Fresno, CA 93791):
- growth regulants:: 1,2 Dihydro-6-ethyoxy-2,2,4-trimethylquinoline;
(2-chloroethyl) phosphoric acid; 4-[acetamino) methyl]-2-chloro-N (2,6-diethyl phenyl acetamide;
Benzoic acid, 3,6 dichloro-2-methoxy,2-ethoxy-l-methyl-2-oxo ethyl ester;
- repellants:: 0,0-dimethyl-0-[(4-methyl thio)-m-tolyl] phosphorothioate;
Tertiary butyl-sulfenyl dimethyl dithio carbamate;
- seed softener:: 2-chloro-6-(trichlomethyl) pyridine;
5-ethoxy-3-trichloromethyl-1,2,4-thiadiazole;
N-phenyl-N'-1,2,3-thiadiazol-5-yl urea;

Pesticides may be characterized by their physical properties, depending on their physical state at normal or ambient conditions, i.e., between 4°C and 32°C (40° F. and 90° F.) and their solubility or miscibility with water or other common organic solvents, e.g., aromatics, such as, toluene, xylene, methylated and polyalkylated naphthalenes, and aliphatic solvents.

Based on the physical properties, the pesticides may be classified into two groups. The first group includes those which are oily liquids at ambient temperatures and are immiscible with water. Specific pesticides include:
Common esters of 2,4-dichlorophenoxyacetic acid,
Common esters of 2,4,5-trichlorophenoxyacetic acid,
Common esters of 2-(2,4-dichlorophenoxy) propionic acid,
Common esters of 2-(2,4,5-trichlorophenozy) propionic acid,
Common esters of 2,4-dichlorobutyric acid,
Common esters of 2,methoxy-3,6-dichlorobenzoic acid,
Common esters of 2-methyl-4-chlorophenoxyacetic acid,
Piperonyl butoxide 3,4-methylenedioxy-6-propyl benzyl n-butyl diethylene glycol ether,
Bromophos ethyl: O,O-diethyl-0-2,5-dichloro-4-bromophenyl thionophosphate,
N-(2-mercaptoethyl) benzene-sulfenamide (BETASAN®),
Isobornyl Thiocyanoacetate (Thanite®),
Ioxynil ester of octanoic acid,
Molinate S-ethyl hexahydro-1H-azepine-1-carbothioate,
PP 511: 0,0-dimethyl-(2-diethylamine 4-methyl-6-pyrimidinyl) carbamate,
PP 211: 0,0-diethyl O-(2-diethylamine-4-methyl-6-pyrimidinyl) phosphorocarbamate,
Chlordane
5-Ethoxy-3-(trichloromethyl-1,2,4-thiadiazole (TERRAZALE®), Ethyl-s-s-dipropyl-phosphodithioate (MOCAP®),
S-Ethyl dipropylthiocarbamate (EPTAM®),
S-Ethyl diisobutylthiocarbamate (SUTAN®),
S-n-propyl-di-n-propylthiocarbamate (VERNAM®),
S-propyl butylethylthiocarbamatae (TILLAM®),
S-ethyl ethylcyclohexylthiocarbamate (RO-NEET®),
Malathion: S-(1,2-dicarboxyethyl)-O,O-dimethyl phosphorodithioate ,
Diazinon; 0,0-diethyl, 0-(2-isopropyl-4-methyl-6-pyrimidinyl) phosphorothioate,
O-Ethyl-S-phenyl-ethylphosphonodithioate (DYFONATE®), Toxaphene: Octachlorocamphene ,
Bromoxynil: 3,5-dibromo-4-hydroxy benzonitrile ester of n-octanoic acid,
2-chloro-N-2,6-diethylphenyl-N-methoxymethylacetamide (LASSO®),
Diallate: S-2,3-dichloroallyl N,N-diisopropylthiolcarbamate,
Triallate; S-2,33-trichloroallyl N,N-diisopropylthiolcarbamate.

The second group comprises those pesticides which are solids at ambient temperatures and for all practical purposes, insoluble in water.
2,4,5-T: 2,4,5-trichlorophenoxy acetic acid
Monuron: 3-(p-chlorophenyl)-1,1-dimethyl urea
Diuron: 3-(3,4-dichlorophenyl)-1,1-dimethyl urea
Bromacil: 5 bromo-3-sec. butyl-6-methyl uracil
Isocil: 5 bromo-3-isopropyl-6-methyl uracil
Linuron: 3-(3,4 dichlorophenyl)-1-methoxy-1 methyl urea
Atrazine: 2-chloro-4-ethylamino-6 isopropylamino-s-triazine
Simazine: 2-chloro-4,6-bis (ethylamino)-s-triazine
Dodine; n-dodecylguanidine acetate
Thiram; tetramethylthiuram disulfide
N-(mercaptomethyl)phthalimide s-(o,o dimethylphosphorodithioate) (IMIDAN®)
Lindane: gamma 1,2,3,4,5,6 hexachlorocyclohexane Folpet: N-trichloromethylphthalimide
Manazon: s-(4,6-diamino-1,3,5-triazin-2-yl methyl)dimethyl phosphorothiolthionate
Barban: 4-chloro-2 butynyl m-chlorocarbanilate
Tricumba: 2-methoxy-3,5,6-trichlorobenzoic acid
Trifluralin: N,N-dipropyl 2,6-dinitro-4-trifluoromethylaniline
2,3 dihydro-5-carboxanilido-6-methyl-1,4-oxathiin (VITAVAX®)
2,4-dichlorophenoxyacetic acid
4-(4-chloro-2 methylphenoxy) butyric acid
2-(2,4-dichlorophenoxy) propionic acid
Ioxynil: 3,5 diiodo-4-hydroxybenzonitrile
Bromoxynil: 3,5 dibromo-4-hydroxybenzonitrile
Carbaryl: 1-naphthyl-N-methylcarbamate
Methoxychlor: 2,2 -bis (p-methoxyphenyl)-1,1-trichloroethane
PP 781: 4(2-chloro phenylhydrazono)-3-methyl-5-isoxazolone*
PP 675: 5-butyl-2-dimethylamino-4-hydroxy-6-methyl pyrimidine*
PP 062: 5,6-dimethyl-2-dimethylamino-4 pyrimidinyl dimethylcarbamate*
PP 149: 5-n-butyl-2 ethylamino-4-hydroxy-6 methylpyrimidine*
C 6313: N'-(4-bromo-3-chlorophenyl)-N-methoxy-N-methylurea
C 6989: 2,4-dinitro-4-trifluoromethyl-diphenylether
Chloroxuron: N'-4-(chlorophenoxy) phenyl-NN-dimethylurea
Dichlobenil: 2,6-dichlorobenzonitrile
Diphenamid: NN-dimethyl-2,2-diphenylacetamide
Fenac: 2,3,6-trichlorophenylacetic acid
Fluometuron: N'-(3-trifluoromethylphenyl)-NN-dimethylurea
GS 14260: 4-ethylamino-2-methylthio-6-t-butyl-amino-1,3,5-triazine
PCP: Pentachlorophenol
Lenacil; 3-cyclohexyl-6,7-dihydro-1H-cyclo-pentapyrimidine-2,4-(3H,5H)-dione
Pyrazon: 5-amino-4-chloro-2-phenyl-3-pyridazone
Metrobromuron: N'-(4-bromophenyl)-N-methoxy-N-methylurea
Metoxymarc: N-(4-methoxybenzoyl)-N-(3,4-dichlorophenyl)-N',N'-dimethylurea
Neburon: N-butyl-N'-(3,4-dichlorophenyl-N-methylurea
NIA 11092: 1,1-dimethyl-3-[3-(N-t-butyl carbamyloxy)phenyl] urea
Mecoprop: 2-(4-chloro-2 methylphenoxy)propionic acid
Monolinuron: N'-(4-chlorophenyl)-N-methoxy-N-methylurea
Nitrofen: 2,4-dichlorphenyl 4-nitrophenylether
Propanil: N-(3,4-dichlororphenyl)propionamide
Pyriclor: 2,3,5-trichloro-4-pyridinol
Solan: 3'-chloro-2-methyl-p-volerotoluidide
Terbacil: 5-chloro-3-t-butyl-6-methyluracil
UC 22463; (SIRMATE)-3,4-dichlorobenzyl N-methylcarbamate
WL 9385: 2-Azido-4-ethylamino-6-t-butylamino-s-triazine
Propachlor: 2-chloro-N-isopropylacetanilide
CP 50144; 2-chloro-N-2,6-diethylphenyl-N-methoxymethylacetamide
CP 31675: 2-chloro-N-(2 methyl-6-t-butylphenyl)acetamide
Cypromid: 3',4 '-dichlorocyclopropane carboxanilide
Fenuron: NN-dimethyl-N'phenylurea
Chlorbromuron: N'-(4-bromo-3-chlorophenyl)-N-methoxy-N-methylurea
Ametryne: 2-methylmercapto-4-ethylamino-6-isopropyl-amino-s-triazine
Prometryne: 2-methylmercapto-4,6-bisisopropyl amino-s-triazine
DCPA: dimethyl 2,3,5,6 - tetrachloroterephthalate
Benefin: N-butyl-N-ethyl-2,2,2-trifluoro-2,6-dinitro-p-toluidine
Nitralin: 2,6-dinitro-4-methylsulfonyl-NN-dipropyl-aniline
PP 493: 2,6-difluoro-3,5-dichloro-4-hydroxy pyridine
CNP: 2,4,6-trichlorophenyl-4'-nitrophenyl ether Pentachloronitrobenzene
1-(butyl carbamoyl)-2-benzimidazol carbamic acid, methyl ester (BENLATE®)

* Manufactured by Imperial Chemical Industries Limited

Typical examples of first components suitable for use in the solvent are alkylpyrrolidones having from 1 to 4 carbon atoms in the alkyl group; cyclic lactones, e.g., gamma-butyrolactones; lower alkylene cyclic carbonates, i.e., ethylene carbonate, propylene carbonate, butylene carbonate; lower alkylimidazolones, e.g., N-N,dimethylimidazolone; lower alkylamides of formic acid and acetic acid, e.g., dimethyl formamide and dimethylacetamide; and lower alkyl sulfoxides, e.g., dimethylsulfoxide. (The term "lower alkyl" in these examples means one or two carbons.) Mixtures of these may also be used as the first component.

Examples of appropriate second components or hydrophobic solvents include alkylpyrrolidones having an alkyl portion containing from 6 to 14 carbon atoms, e.g., octylpyrrolidone, dodecylpyrrolidone, or N-(2'-ethylhexylpyrrolidone), alkyl gamma-butyrolactones, alkyl cyclic carbonates and combinations thereof, wherein the alkyl chains contain from 6 to 14 carbon atoms. The alkyl portion may be distributed at one or more sites on the ring so long as one portion contains at least 6 carbon atoms and the total number of alkyl carbon atoms does not exceed 14. For each of the above examples, the 6 to 14 carbon alkyl portions may be straight, branched, or cyclic, with straight chains being preferred.

Preferably, the first component is selected from the group consisting of pyrolidones having the formula 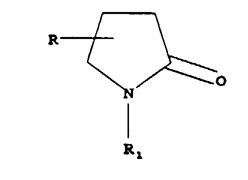 wherein R is hydrogen or lower alkyl having from 1 to 4 carbon atoms and R₁ is lower alkyl having from 1 to 4 carbon atoms.

The second component or hydrophobic solvent is preferably selected from pyrrolidones having the formula 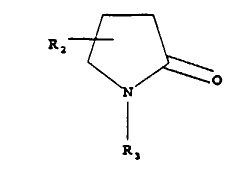 wherein R₂ is hydrogen or alkyl having from 6 to 14 carbon atoms and R₃ is alkyl having from 6 to 14 carbon atoms with the proviso that at least one of R₂ or R₃ must contain at least 6 carbon atoms and the sum of the carbon atoms in R₂ and R₃ cannot exceed 14.

The inventive composition further comprises an organic diluent which is a synthetic or naturally occurring oil having a high hydrophobic character or having a fractional dispersive solubility parameter of greater than 70% and preferably greater than 85% and a molar volume of greater than 90 cm³/mole. These properties are defined in the C.R.C. Handbook referred to hereinabove. Typical diluents include soybean oil, rapeseed oil, long chain alcohols, long chain ketones, long chain esters, and ethers. As used herein, "long chain" means with 6 or more carbon atoms. Also suitable as the organic diluent are aromatic petroleum oils including those which are commercially available distillates from crude oils having an average boiling point greater than 200° C. Typical of such materials are those sold under the trademarks Exxon 200 or Texaco 400. Of course, such aromatics should be approved for use as a carrier for agriculturally active chemicals.

The composition of the aromatic petroleum oil is generally:
Heavy aromatic solvent naphtha - about 60%;
Middle distillate solvent extractant - about 40%.

Normally, these oils contain predominantly the C₉-C₁₅ aromatic hydrocarbons and primarily the C₁₀-C₁₂ hydrocarbons having a flash point of about 95°C (203° F).

The amount of solvent used is in the range from about 20 to 90%, while the amount of diluent is about 80 to 10%, based on the weight of solvent and diluent in the composition. With respect to the solvent, the amount of the first component is from about 5 to 95%, and preferably, 20 to 80%; and the amount of the second component is from about 5 to 95%, and preferably, 20 to 80%, based on the weight of the solvent.

The inventive composition also contains one or more additional emulsifier(s) or surfactant(s) which is generally selected on a case by case basis in order to optimize the solubility and stability of the emulsion. Typically, such emulsifiers include ethoxylated alkyl phenols, linear aliphatic polyesters, linear aromatic polyesters, polyethoxylated alcohols, linear aliphatic ethoxylates, polyethoxylated castor oil, polyethoxylated carboxylates, and polyethoxylated alkylamines. Anionic surfactants may be used as the emulsifier and include phosphate esters and their salts, alkyl sulfonamides, salts of sulfated nonylphenoxypoly(ethyleneoxy) ethanol, salts of alkylbenzene sulfonates, salts of alkylnaphthalene sulfonate, and sulfonated aliphatic polyesters and their salts. Also suitable are complex phosphate esters of non-ionic surfactants of the ethylene oxide type which are mixtures of diesters of phosphoric acid. (See, for example, McCutcheon's, Emulsifiers and Detergents (1989), published by McCutcheon's Division of M.C. Publishing Co., Glen Rock, New Jersey.) Generally, the amount of emulsifier (surfactant) is from about 1 to 25% based on the total weight of the composition.

The agriculturally active chemical (sometimes referred to herein as AAC) concentration should be as high as possible so long as it does not precipitate out upon dilution of the concentrate with water for a reasonable period of time and achieves the desired effect. Precipitation (crystal formation) on standing not only depletes the solution of AAC, it can also lead to fouling of application equipment, i.e., sprayers, etc. With the present invention, it is possible to obtain concentrates with agriculturally active chemical concentrations in excess of 5 weight percent which form a stable emulsion upon being diluted with water. Depending on the particular agriculturally active chemical, the concentration of the AAC may be 5-60%, preferably 5 to 25% based on the total weight of the composition before dilution.

The final use concentration values depend on the AAC. However, it is important that upon dilution, the diluted form remain stable for a time sufficient to allow it to be applied. This, of course, will vary with the schedule for the application in the field. Normally, the diluted concentrate is applied within four hours of dilution. It is possible, however, due to equipment and personnel delays, that a standing period of up to 24 hours may be encountered. With the present invention, prolonged stability of the emulsified concentrate, as is, as well as in the diluted form is obtained. In particular, the emulsified concentrate in accordance with the present invention can be diluted to final use concentrations in the range from about 10 ppm to 2 percent, depending on the specific AAC, without any adverse effects, and specifically, precipitation of the AAC from the solution.

The following examples illustrate the present invention*:
* In the examples, all compositional percentages are percent by weight of the total composition unless otherwise indicated.

### Experimental Procedure:

### Formulations:

Formulations were prepared by weighing the exact proportion of ingredients and mixing them together in a bottle. The solvents were weighed in first. The AAC was dissolved completely in the solvent system followed by addition of the surfactant serving as wetting agent or emulsifying agent. Typically, about 10g of each of the formulations was prepared.

The contents were stirred well in an automatic rocking shaker for about 30 minutes when the AAC dissolved completely. The samples thus prepared were evaluated for freeze-thaw stability on storage and ease of emulsification and emulsion stability on dilution. For dilution, 2 grams of concentrate were diluted to 50 grams using World Health Organization (WHO) standard (6g of CaCl₂ and 2.78g of MgCl₂6H₂O dissolved in 20L) hard water having a hardness of 342 ppm expressed as CaCO₃ equivalent.

### Freeze-Thaw Stability:

The concentrates were stored for a period of 24 hours in the cold (temperature 5° C.) in a refrigerator and taken out and thawed to room temperature and then stored at 55° C. in an oven for a period of 24 hours. The alternate storage in the cold (5° C.) and warm condition at 55° C. was repeated for three cycles. Any separation during the storage was recorded. A concentrate is "stable" if there is no substantial separation after the 24 hour cycles at each temperature. All of the solutions exemplified hereinafter exhibited stability according to this test between the temperatures of 5°C and 55°C. Some of the solutions were even stable at a lower range of -5°C.

### Evaluation of Emulsion Stability and Ease of Emulsification

A Nessler tube (1.8 cm diameter; 28 cm long) was filled with an appropriate quantity (47-48 g) of WHO water. (World Health Organization (WHO) standard (6g of CaCl₂ and 2.78g of MgCl₂6H₂O dissolved in 20L) hard water having a hardness of 342 ppm expressed as CaCO₃ equivalent.) Using a serological pipette, 0.5-2.5g of emulsion concentrate was dropped into the Nessler tube containing 47.5-49.5g water. The initial bloom was observed at zero time without stirring and the quality of the bloom was graded by visual appearance as shown below. The Nessler tube was stopped and inverted 20 times; the bloom was again recorded and so also stability as judged by volume or height of the sedimentation (cream/ppt/oil) followed at different intervals of time: 0, 1 hour, 2 hours, up to 24 hours.

### Stability of Diluted Concentrate:

The composition of the concentrate (EC) diluted with water was considered "stable" if at EC concentrations of from 0.2 to 1%, the composition after mixing (twenty inversions) exhibited two mm or less cream and no oil in one hour. Both top and bottom should be checked.

| | | |
|---|---|---|
| Bloom | Excellent | Thick emulsion cloud with no separation |
| | | |
| | Good | Emulsion cloud may be thin, or may exhibit trailing, small number of oil droplets within cloud |
| | | |
| | Poor | Many oil droplets within cloud, some droplets separate from cloud |

Each of the emulsifiable concentrates thus prepared were analyzed for ease of emulsification (bloom) upon addition of water and after twenty inversion of the sample as well as emulsion stability upon dilution with water. The composition of the samples and the results of the analysis are set forth in the following tables.

### Crystal Formation Studies

A number of the samples were evaluated for precipitation of AAC, i.e., crystal growth over varying time periods. This was done using the following techniques:
1. The diluted sample was placed in a 100 ml beaker and stirred continuously. Aliquots were removed at 1, 4, 7, and/or 24 hour intervals and examined under 250 x magnification, using a 2x2 mm slide, which provided 1500 separate viewing areas. The number of crystals, if any, in ten different viewing areas were counted and averaged. If no crystals were found, second and third aliquots were examined.
2. The remaining portion of the diluted sample was passed through U.S. Standard screens (60, 100 and 250 mesh) and sediment retained is reported.
3. The diluted sample was allowed to stand without stirring for 24 hours and inverted twenty times. An aliquot of the inverted sample was examined under 250 x and the results reported as above. The reamining portion was passed through screens and retained sediment reported.

The results for the crystal growth studies are reported as follows:

| | |
|---|---|
| 0 | means no crystals |
| * | means < 10 crystals/view area |
| ** | means 10-100 crystals/view area |
| *** | means 100-1000 crystals/view area |
| **** | means > 1000 crystals/view area |

The components set forth in the Tables are referred to by their commercial names for purposes of brevity. The chemical nomenclature of the materials is as follows:
- LP-100: N-octylpyrrolidone
- LP-300: N-dodecylpyrrolidone (C₁₂ chain)
- LP-940: N-octadecylpyrrolidone (C₁₈ chain)
- Gafac RM 710: Poly(oxy-1,2-ethanediyl)α-(dinonylphenyl)-omega-hydroxy-phosphate.
- Igepal CO-630: Ethoxylated nonyl phenol containing 9 EO units
- Thidiazuron: 1-phenyl-3-(1,2,3-thiadiazol-5-yl)urea
- Gafac RE-610: Poly(oxy-l,2-ethanediyl)α-(nonylphenyl)-omega-hydroxy-phosphate.
- Silwet L-77: (Silwet copolymer L-77) nonionic organo silicone (Union Carbide)
- Silwet L-7607: (Silwet copolymer L-7607) nonionic organo silicone (Union Carbide)
- Pegol L-31: Ethoxylated polyoxy propylene
- Exxate 600: Acetic acid ester with C₆-rich OXO alcohol
- Exxate 900: Acetic acid ester with C₉-rich OXO alcohol
- Exxate 1300: Acetic acid ester with C₁₃-rich OXO alcohol
- Diuron: 3-(3,4-dichlorophenyl)-1,1-dimethylurea
- Exxon 100: Light aromatic solvent naphtha (petroleum) consists predominantly of C₈ - C₁₀ aromatic hydrocarbons; boiling point range 152-168°C.
- Exxon 150: Heavy aromatic solvent naphtha (petroleum) consists predominantly of C₉ - C₁₁ aromatic hydrocarbons; boiling point range 176-210°C.
- Exxon 200: Heavy aromatic solvent naphtha (petroleum) consists predominantly of C₉ - C₁₅ aromatic hydrocarbons; boiling point range 217-293°C.

In the tables, SUPER refers to the upper layer on separation and PCPT refers to the bottom layer.

### Example 1:

A series of twelve compositions wherein the amount of a first pyrrolidone component (N-methylpyrrolidone), second pyrrolidone component (N-octylpyrrolidone) and aromatic solvent were varied using a surface-active agent from 14.3% to 22.2% by weight and agriculturally active chemical from 25.8% to 41.6% by weight. (See Table 1.) The surface-active agent was Gafac RE-610 (ethoxylated phosphate ester), and the agriculturally active chemical (AAC) was N-(1-ethylpropy)-2,6-dinitro-3,4-xylidine (PRL).

As an illustration, formulation #11 included in Table 1-2 was prepared by weighing together the following ingredients in a one ounce bottle:

**TABLE 1-1**

| | | |
|---|---|---|
| N-methylpyrrolidone | 2.75g | 20.4% |
| | | |
| N-octylpyrrolidone | 1.25g | 9.3% |
| | | |
| Aromatic Petroleum oil - Exxon 200 | 1.00g | 7.4% |
| | | |
| PRL (N-1 ethyl propyl)-2,6-dinitro-3,4-xylidine (92% Tech.) | 5.50g | 40.7% |
| | | |
| Phosphate ester (Gafac RE-610) | 3.00g | 22.2% |
| | | |
| TOTAL: | $\overline{\text{13.50g}}$ | $\overline{\text{100.0%}}$ |

The contents were stirred well in an automatic rocking shaker for about 30 minutes when the AAC dissolved completely. The samples thus prepared were evaluated for freeze-thaw stability on storage and ease of emulsification and emulsion stability on dilution.

The composition of the samples are set forth in Table 1-2 and the results of the analysis are set forth in Table 1-3. The freeze-thaw stability was measured as follows: Compositions 1 through 7 included in Table 1-2 passed freeze-thaw stability test when stored at -10° C. to 55° C. for 3 cycles of 24 hour periods. Compositions 8 through 12 included in Table 1-2 passed freeze-thaw stability test when stored at 5° C. to 55° C. for 3 cycles of 24 hour periods. Formulations 11 showed maximum freeze-thaw stability with PRL at 40.7%.

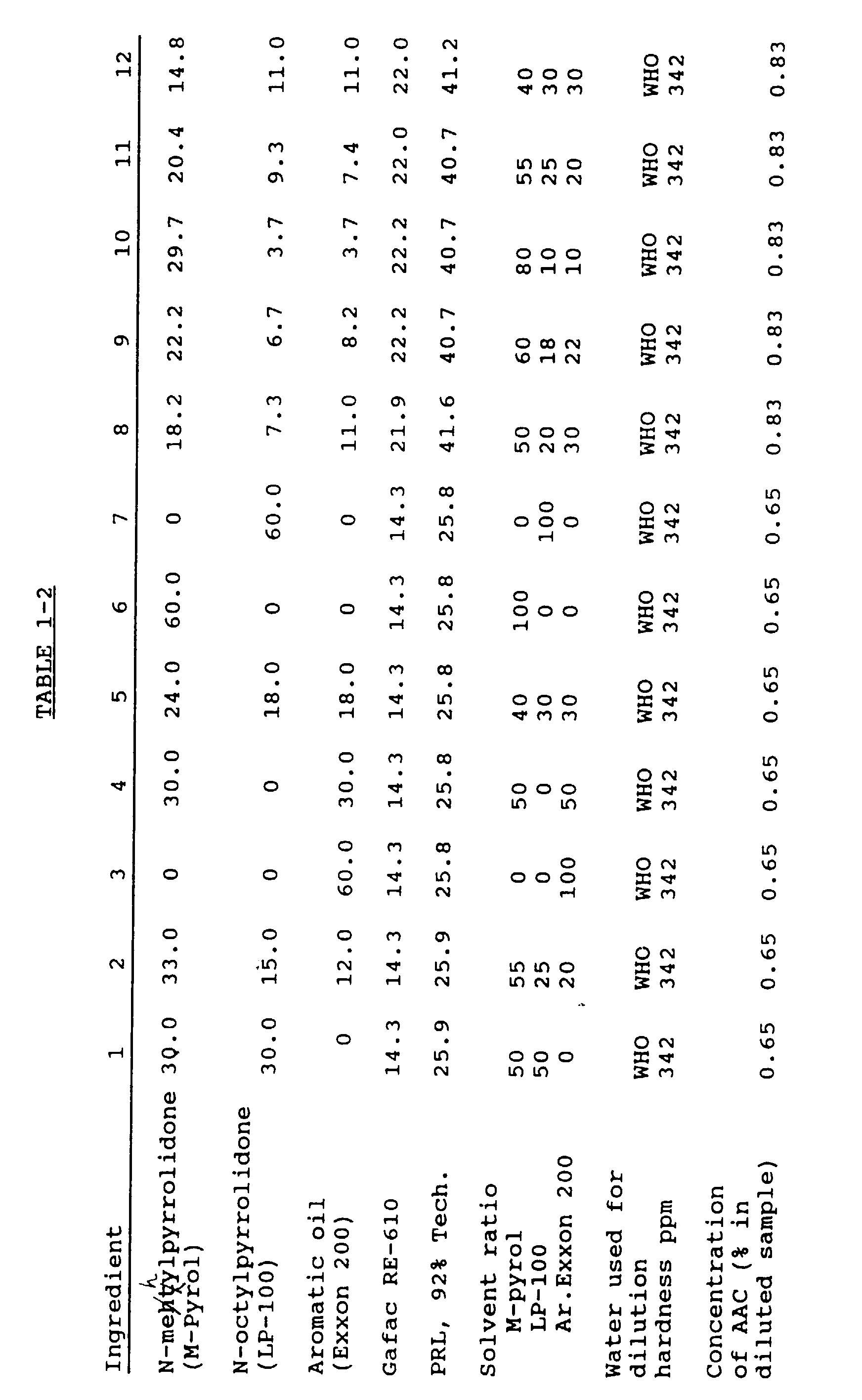

**TABLE 1-3**

| EMULSION STABILITY AND BLOOM CHARACTERISTICS | | | | | | |
|---|---|---|---|---|---|---|
| | Bloom | | Stability | | | |
| | Bloom at Zero Time * | After 20 Inversions ** | Thickness of Separation cream, oil or precipitation at 0 time | Separation after Mixing and standing for: | | |
| | | | | 1 | 2 | 24 |
| | | | | hours | | |
| 1 | poor - fair | excellent | 20 mm cream ppt | <1 mm | <1 mm | crystals to the top |
| | | | | | | |
| 2 | exellent spont. | excellent | 0 | 0 | 0 | 0 |
| | | | | | | |
| 3 | excellent | excellent | 2 mm creamy | 2 mm | 2 mm | 2.5 mm |
| | | | | | | |
| 4 | excellent | excellent | <1 mm | <1 mm | 1 mm | 1 mm |
| | | | | | | |
| 5 | excellent spont. | excellent | 0 | 0 | 0 | 0 |
| | | | | | | |
| 6 | excellent | excellent | 0 | 0 | 0 | <1 mm |
| | | | | | | |
| 7 | poor | excellent | 1 mm | <1 mm | 1 mm | 4 mm cream on bottom 4 mm oil on top |
| | | | | | | |
| 8 | excellent spont. | excellent | <1 mm | trace | trace | trace |
| | | | | | | |
| 9 | excellent spont. | excellent | 0 | 0 | 0 | trace |
| | | | | | | |
| 10 | excellent spont. | excellent | trace | 0 | 0 | <1 mm |
| | | | | | | |
| 11 | excellent spont. | excellent | trace | 0 | 0 | trace |
| | | | | | | |
| 12 | excellent spont. | excellent | <1 mm | trace | trace | trace |

| | | | | | | |
|---|---|---|---|---|---|---|
| * The descriptions have the following meanings: poor-fair - emulsion produced between one and five minutes excellent - emulsion produced after two seconds spontaneous - emulsion produced instantly | | | | | | |
| ** excellent - complete emulsification obtained. Thick emulsion cloud with no separation. ** good - emulsion cloud may be thin, or may exhibit trailing, small number of oil droplets within cloud ** poor - many oil droplets within cloud, some droplets separate from cloud | | | | | | |

### Example 2:

A second series of two experiments was carried out using the following formulation:

**TABLE 2-1**

| | | |
|---|---|---|
| 1. | CGA (98% Tech.) | 22.2% |
| 2. | N-methylpyrrolidone | 33.3% |
| 3. | N-octylpyrrolidone | 16.7% |
| 4. | Texaco Aromatic 400 | 16.7% |
| 5 | Gafac RE-610 (GAF) | 11.1% |
| | | $\overline{\text{100.0%}}$ |

As mentioned earlier CGA has the formula

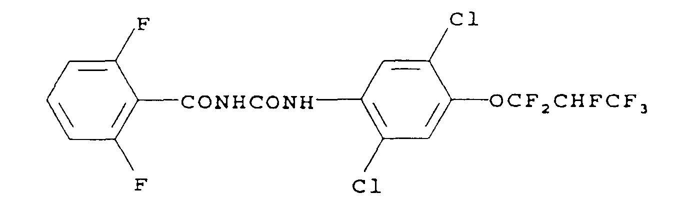

This composition was prepared by weighing out the individual quantities of the ingredients and adding the anionic emulsifier (5) to the N-methylpyrrolidone, admixing the agriculturally active chemical to this mixture, adding the N-octylpyrrolidone to the resulting mixture, and finally, adding the aromatic diluent (4) and mixing the entire composition to make it uniform. The formulation thus prepared was clear. Samples of the formulation were stored at -10°C and 55°C for each of three 24 hr. periods. No precipitation nor separation of any of the ingredients was observed for the samples.

The concentrate thus prepared was diluted in a standard 37 cm x 2 cm Nessler's tube using WHO standard water. Two dilutions of emulsifiable concentrate to water of 5 : 100 and 0.6 : 100 were prepared. The bloom characteristics and emulsion stabilities of each of these dilutions are set forth in the following Table.

**TABLE 2-2**

| EMULSION STABILITY AND BLOOM CHARACTERISTICS | | |
|---|---|---|
| Formulation | I. | II. |
| Conc. of active | 22% | 22% |
| | | |
| Dilution: | 2.5:47.5 (1/20) | 0.3:49.8 (1/167) |
| | | |
| Water used for dilution | WHO standard 342 ppm | WHO standard 342 ppm |
| | | |
| Con. of active in the diluted sample | 1.11% | 0.13% |
| | | |
| Bloom at 0 time | spontaneous | spontaneous |
| | | |
| After 20 inversions | excellent | excellent |
| | | |
| Separation or Precipitation after mixing and standing for: | | |
| 1 hour | none | none |
| 2 hours | none | none |
| 4 hours | none | none |
| 10 hours | none | none |
| 24 hours | none | none |

### Example 3:

A third series of experiments were carried out using the following compositions:

**TABLE 3-1**

| | | 3.I | 3.II |
|---|---|---|---|
| 1. | CGA (98% Tech) | 20.4% | 10.3% |
| | | | |
| 2. | N-methylpyrrolidone | 34.2% | 38.5% |
| | | | |
| 3. | N-octylpyrrolidone | 17.0% | 19.2% |
| | | | |
| 4. | Soybean oil (White Rose polyunsaturated vegetable oil) | 17.0% | 19.2% |
| | | | |
| 5. | Gafac RE-610 (GAF) | 11.4% | 12.8% |
| | | $\overline{\text{100.0%}}$ | $\overline{\text{100.0%}}$ |

The compositions were prepared by weighing out individual ingredients 1 through 4 and dissolving the anionic emulsifier (5) in the admixture. The entire composition was mixed in an automatic rocking shaker to obtain a uniform and clear composition. Samples of the formulations I and II were stored at -10° C. and 55° C. for each of three 24 hour periods. No separation or precipitation of any ingredients was observed in the two samples. The concentrates thus obtained were each diluted in a standard 37 cm x 2 cm Nessler's tube with two different diluents. In one case, the diluent was deionized water and in the other case, acetic acid at pH 2.5. Two dilutions of emulsifiable concentrate to diluent at 1:20 and 1:66 were prepared for each diluent. The bloom characteristics and emulsion stabilities of each of these dilutions are set forth in Table 3-2.

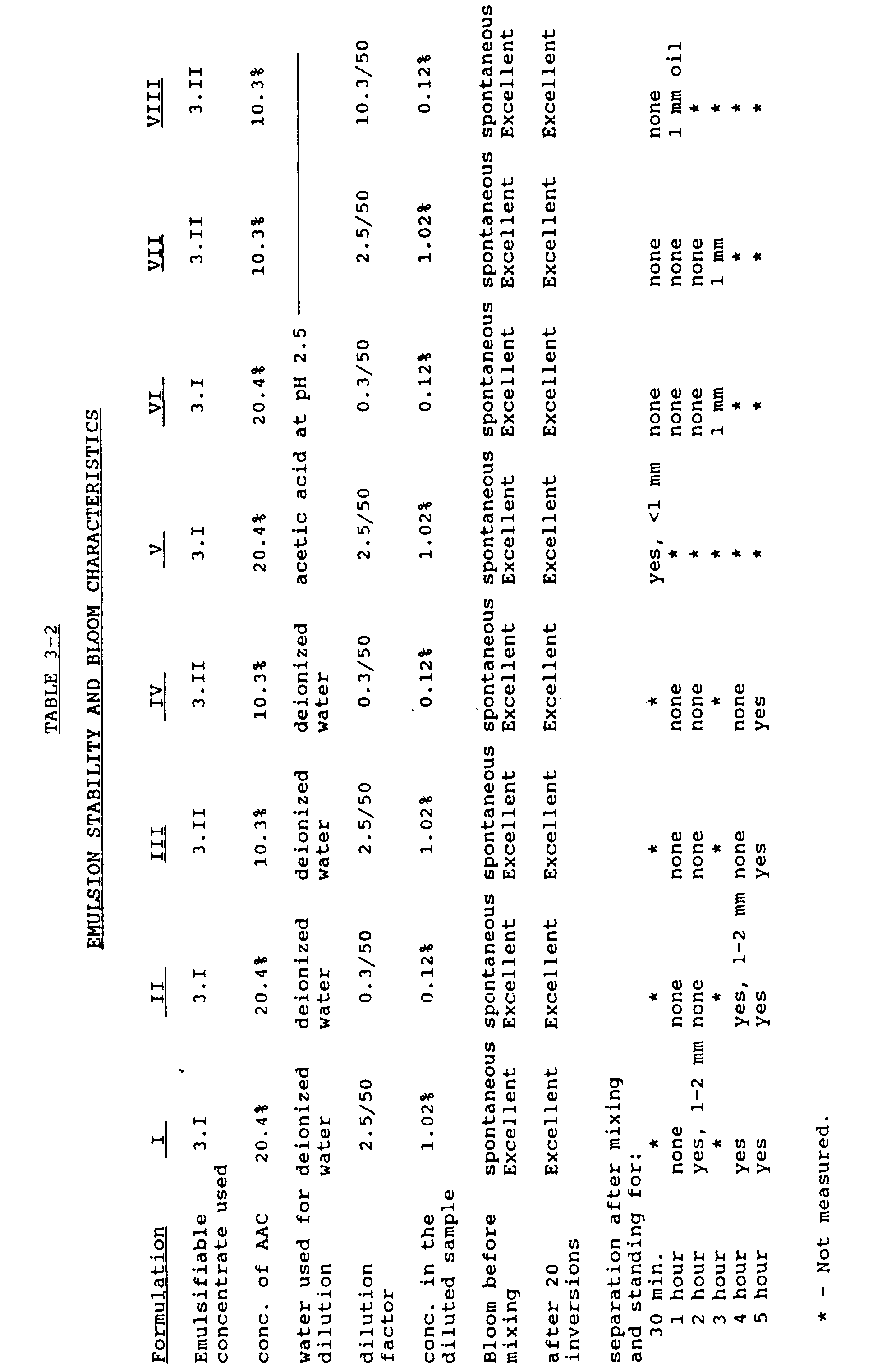

The above experiment was performed for evaluation of the formulation to be used as a direct feed to host animals as an insecticide. The compositions 3.I and 3.II were also diluted with soybean oil to result in 1000 ppm in AAC and did not form any ppt or separation. Thus, the formulation could be fed to the host animal (dogs) as is, or as a diluted sample in vegetable oil, e.g. soybean oil.

### Example 4:

Use of N-octylpyrrolidone and N-dodecylpyrrolidone in combination.

A fourth series of experiments were carried out using the following five compositions:

**TABLE 4-1**

| | | 4.1 | 4.2 | 4.3 | 4.4 | 4.5 |
|---|---|---|---|---|---|---|
| 1. | N-methylpyrrolidone | 33.0% | 33.0% | 33.0% | 33.0% | 33.0% |
| | | | | | | |
| 2. | N-octylpyrrolidone | 0% | 10.0% | 5.0% | 7.5% | 15.0% |
| | | | | | | |
| 3. | N-dodecylpyrrolidone | 15.0% | 5.0% | 10.0% | 7.5% | 0% |
| | | | | | | |
| 4. | Aromatic petroleum oil - Exxon-200 | 12.0% | 12.0% | 12.0% | 12.0% | 12.0% |
| | | | | | | |
| 5. | Gafac RE-610 (GAF) | 14.2% | 14.2% | 14.2% | 14.2% | 14.2% |
| | | | | | | |
| 6. | PRL (same as in Example 1): 92% Tech | 25.8% | 25.8% | 25.8% | 25.8% | 25.8% |
| | | $\overline{\text{100.0%}}$ | $\overline{\text{100.0%}}$ | $\overline{\text{100.0%}}$ | $\overline{\text{100.0%}}$ | $\overline{\text{100.0%}}$ |

The compositions were prepared as explained in Example 1. Each of the emulsified concentrates thus prepared was analyzed for ease of emulsification and emulsion stability as explained under Example 1. Results are summarized in Table 4-2. These formulations passed three cycles of freeze-thaw between -10° C. and 55° C.

**TABLE 4-2**

| EMULSION STABILITY AND BLOOM CHARACTERISTICS | | | | | |
|---|---|---|---|---|---|
| Formulation | I | II | III | IV | V |
| Emulsifiable concentrate used | 4.1 | 4.2 | 4.3 | 4.4 | 4.5 |
| | | | | | |
| conc. of AAC | 25.8% | 25.8% | 25.8% | 25.8% | 25.8% |
| | | | | | |
| water used for WHO 342 ppm hardness dilution | | | | | |
| | | | | | |
| dilution factor | 1.2/48.8 | 1.2/48.8 | 1.2/48.8 | 1.2/48.8 | 1.2/48.8 |
| | | | | | |
| conc. of PRL in diluted sample | 0.6% | 0.6% | 0.6% | 0.6% | 0.6% |
| | | | | | |
| Bloom before mixing | Fair | Excellent | Fair | Excellent | Excellent |
| | | | | | |
| Bloom after 20 inversions | Excellent | Excellent | Excellent | Excellent | Excellent |
| | | | | | |
| separation after mixing and standing for: | | | | | |
| 1 hour | <1 mm | 0 | Trace | 0 | Trace |
| 2 hour | 1 mm | 0 | Trace | 0 | Trace |
| 3 hour | 1 mm | 0 | <1 mm | 0 | Trace |
| 24 hour | 2 mm | 0 | 1 mm | 0 | Trace |

### Example 5:

### Tank Mix Compatibility

A formulation containing 16.6% of the ammonium salt of 2-[4,5-dihydro-4-methyl-4-(1-methyl ethyl)-5 OXO-1 H-imidazol-2-yl]-3 quinoline carboxylic acid, (referred to herein as SCP) in the water was prepared by dissolving an appropriate quantity of the free acid in an ammonium hydroxide solution containing a stoichiometric amount of the base. The final pH was adjusted to 7.2. It is customary to use the PRL of Example 4 in conjunction with SCP in the ratio of 6:1 for better weed control. The following experiment demonstrates the compatibility of different AAC's in the composition of the invention.

Formulations 4.1, 4.2, 4.3, 4.4, and 4.5 were diluted as shown in Example 4 and summarized in Table 4-2, except that SCP was also added to the water. The effect on stability and emulsion bloom from the two AAC's present are summarized in Table 5-1.

**TABLE 5-1**

| EMULSION STABILITY AND BLOOM CHARACTERISTICS Mixed AAC's - Tank Mix Capability | | | | | |
|---|---|---|---|---|---|
| Formulation | I | II | III | IV | V |
| Emulsifiable concentrate used (Example 4) | 4.1 | 4.2 | 4.3 | 4.4 | 4.5 |
| | | | | | |
| conc. of PRL (Example 4) | 25.8% | 25.8% | 25.8% | 25.8% | 25.8% |
| | | | | | |
| water used for WHO 342 ppm hardness dilution | | | | | |
| | | | | | |
| conc. of PRL-SCP in diluted sample | 1.5% | 1.5% | 1.5% | 1.4% | 1.5% |
| | | | | | |
| conc. of PRL in diluted sample | 1.00% | 1.00% | 1.00% | 1.00% | 1.00% |
| | | | | | |
| conc. of SCP in diluted sample | 0.5% | 0.5% | 0.5% | 0.5% | 0.5% |
| | | | | | |
| Bloom at 0-time before mixing | Excellent | Excellent | Excellent | Excellent | Excellent |
| | | | | | |
| Bloom after 20 inversions | Excellent | Excellent | Excellent | Excellent | Excellent |
| | | | | | |
| separation after mixing and standing for: | | | | | |
| 1 hour | <2 mm | <2 mm | <1 mm | 1 mm | 2 mm |
| 3 hour | 2 mm | 4 mm | 1 mm | 2 mm | 4 mm |
| 18 hour | 2 mm | 4 mm | 2 mm | 2 mm | 4 mm |

### Conclusion:

Use of the two component solvent system of the invention is advantageous compared to using either component alone in terms of AAC stability.

### Example 6:

Tank mix compatibility was also demonstrated by making the following formulations using PRL and a freeze-dried SCP. The following formulation was prepared as explained in Example 1.

**TABLE 6-1**

| | | 6.1 | 6.2 | 6.3 | 6.4 | 6.5 |
|---|---|---|---|---|---|---|
| 1. | N-methylpyrrolidone | 35.3% | 35.3% | 35.3% | 35.3% | 35.3% |
| | | | | | | |
| 2. | N-octylpyrrolidone | 16.1% | 12.0% | 8.0% | 4.0% | 0% |
| | | | | | | |
| 3. | N-dodecylpyrrolidone | 0% | 4.0% | 8.0% | 12.0% | 16.0% |
| | | | | | | |
| 4. | Aromatic petroleum oil - Exxon-200 | 12.8% | 12.8% | 12.8% | 12.8% | 12.8% |
| | | | | | | |
| 5. | Gafac RE-610 (GAF) | 9.2% | 9.2% | 9.2% | 9.2% | 9.2% |
| | | | | | | |
| 6. | PRL: 92% Tech | 23.0% | 23.0% | 23.0% | 23.0% | 23.0% |
| | | | | | | |
| 7. | SCP | 3.7% | 3.7% | 3.7% | 3.7% | 3.7% |
| | (See Example 6A) | $\overline{\text{100.0%}}$ | $\overline{\text{100.0%}}$ | $\overline{\text{100.0%}}$ | $\overline{\text{100.0%}}$ | $\overline{\text{100.0%}}$ |

The formulations shown in Example 6, i.e., 6.1 through 6.5 were diluted and the emulsion bloom and stability were evaluated as shown earlier. The results are summarized in Table 6-2. These formulations, i.e., 6.1 through 6.5, passed three cycles of freeze-thaw at 5° C. to 55° C.

### Example 6A:

16.8g of SCP 97.4% Tech. were stirred with 52 ml in ammonium hydroxide until complete solution resulted. The sample was filtered over a Whatman #4 filter under suction. The filtrate was freeze-dried at 80° C. and ≤ 100 milliliter vacuum for a period of 24 hours.

**TABLE 6-2**

| EMULSION STABILITY AND BLOOM CHARACTERISTICS | | | | | |
|---|---|---|---|---|---|
| Formulation | I | II | III | IV | V |
| Emulsifiable concentrate used | 6.1 | 6.2 | 6.3 | 6.4 | 6.5 |
| | | | | | |
| conc. of PRL SCP | 23.0% 3.7% | 23.0% 3.7% | 23.0% 3.7% | 23.0% 3.7% | 23.0% 3.7% |
| | | | | | |
| water used for WHO 342 ppm hardness dilution | | | | | |
| | | | | | |
| dilution factor | 2.5/47.5 | 2.5/47.5 | 2.5/47.5 | 2.5/47.5 | 2.5/47.5 |
| | | | | | |
| conc. of PRL in diluted sample | 1.15% | 1.15% | 1.15% | 1.15% | 1.15% |
| | | | | | |
| conc. of SCP in diluted sample | 0.185% | 0.185% | 0.185% | 0.185% | 0.185% |
| | | | | | |
| Bloom upon addition | Good | Good | Good | Fair | Excellent |
| | | | | | |
| Bloom after 20 inversions | Excellent | Excellent | Excellent | Excellent | Excellent |
| | | | | | |
| separation before mixing | 4 mm | 4 mm | 4 mm | 4 mm | 2 mm |
| | | | | | |
| separation after mixing and standing for: | | | | | |
| 1 hour | 4 mm | 4 mm | 2 mm | 2 mm | 2 mm |
| 4 hour | 4 mm | 4 mm | 2 mm | 2 mm | 3 mm |
| 18 hour | 4 mm | 4 mm | 2 mm | 2 mm | 3 mm |

Formulations 6.3 and 6.4 produced improved stability on dilution. The cream re-emulsified after 10 inversions and reappeared 15 minutes after the 10 inversions.

### Example 7:

The following formulations 7.1 through 7.5 were prepared exactly as explained in Example 1, except that N³,N³, di-N-propyl-2,3-dinitro-6-trifluoromethyl-M-phenylenediamine (PRO) was used. These formulations passed three cycles of freeze-thaw at 5° C. to 55° C.

**TABLE 7-1**

| | | 7.1 | 7.2 | 7.3 | 7.4 | 7.5 |
|---|---|---|---|---|---|---|
| 1. | N-methylpyrrolidone | 34.7% | 34.7% | 34.7% | 34.7% | 34.7% |
| | | | | | | |
| 2. | N-octylpyrrolidone | 15.8% | 11.8% | 7.9% | 4.0% | 0% |
| | | | | | | |
| 3. | N-dodecylpyrrolidone | 0% | 4.0% | 7.9% | 11.8% | 15.8% |
| | | | | | | |
| 4. | Aromatic petroleum oil - Exxon-200 | 12.6% | 12.6% | 12.6% | 12.6% | 12.6% |
| | | | | | | |
| 5. | Gafac RE-610 (GAF) | 10.6% | 10.6% | 10.6% | 10.6% | 10.6% |
| | | | | | | |
| 6. | PRO: 94.7% Tech | 26.3% | 26.3% | 26.3% | 26.3% | 26.3% |
| | | $\overline{\text{100.0%}}$ | $\overline{\text{100.0%}}$ | $\overline{\text{100.0%}}$ | $\overline{\text{100.0%}}$ | $\overline{\text{100.0%}}$ |

The above formulations were diluted and the emulsion characteristics were evaluated as before. The results are summarized in Table 7-2. The results show that the use of dodecylpyrrolidone or a mixture of 75:25 N-dodecylpyrrolidone and N-octylpyrrolidone used as the second component resulted in better emulsion stability when compared to use of N-octylpyrrolidone alone.

**TABLE 7-2**

| EMULSION STABILITY AND BLOOM CHARACTERISTICS | | | | | |
|---|---|---|---|---|---|
| Formulation | I | II | III | IV | V |
| Emulsifiable concentrate used | 7.1 | 7.2 | 7.3 | 7.4 | 7.5 |
| | | | | | |
| conc. of PRO | 26.3% | 26.3% | 26.3% | 26.3% | 26.3% |
| | | | | | |
| water used for WHO 342 ppm hardness dilution | | | | | |
| | | | | | |
| dilution factor | 2.5/47.5 | 2.5/47.5 | 2.5/47.5 | 2.5/47.5 | 2.5/47.5 |
| | | | | | |
| conc. of PRO in diluted sample | 1.31% | 1.31% | 1.31% | 1.31% | 1.31% |
| | | | | | |
| Bloom at 0-time before mixing | Excellent | Excellent | Excellent | Excellent | Excellent |
| | | | | | |
| Bloom after 20 inversions | Excellent | Excellent | Excellent | Excellent | Excellent |
| | | | | | |
| separation before mixing | 1 mm | 1 mm | Trace | 0 | 0 |
| | | | | | |
| separation after mixing and standing for: | | | | | |
| 0 hour | 2 mm | 2 mm | 0 | 0 | 0 |
| 1 hour | 2 mm | 2 mm | <1 mm | Trace | Trace |
| 2 hour | 3 mm | 3 mm | 1.5 mm | 1 mm | 1 mm |
| 3 hour | 3 mm | 3 mm | 1.5 mm | 1 mm | 1 mm |
| 4 hour | 4 mm | 4 mm | 2 mm | 1 mm | 1 mm |

### Example 8:

The following formulations 8.1 through 8.16 were prepared exactly as explained in Example 1 except that a fungicide N,N'-(1,4-piperazinediyl bis (2,2,2-trichloro) ethylidene)bisformamide (TRI) was used.

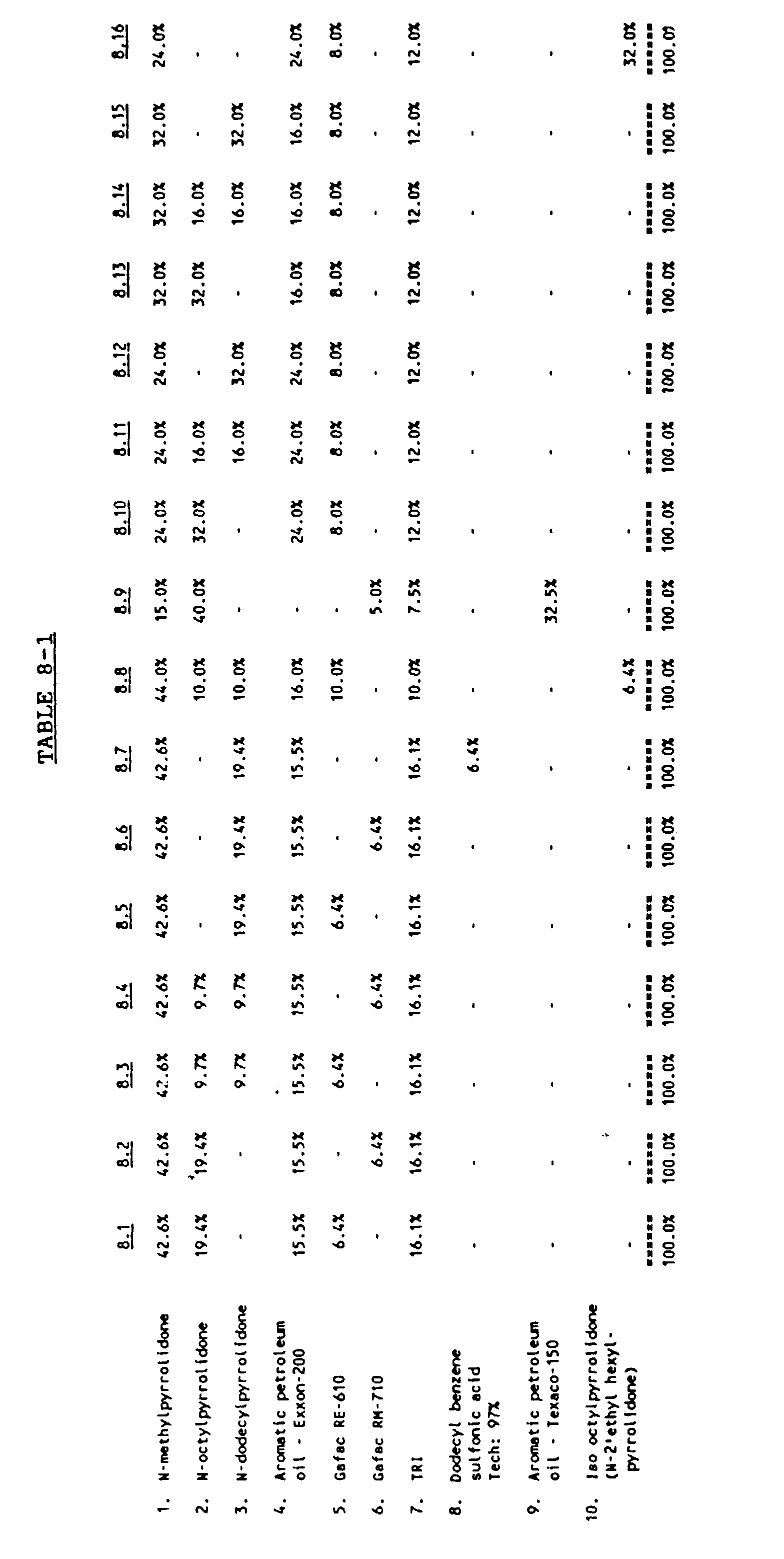

The ease of emulsification and emulsion stability of the above six formulations were evaluated after dilution, as before, and the results are summarized in Table 8-2.

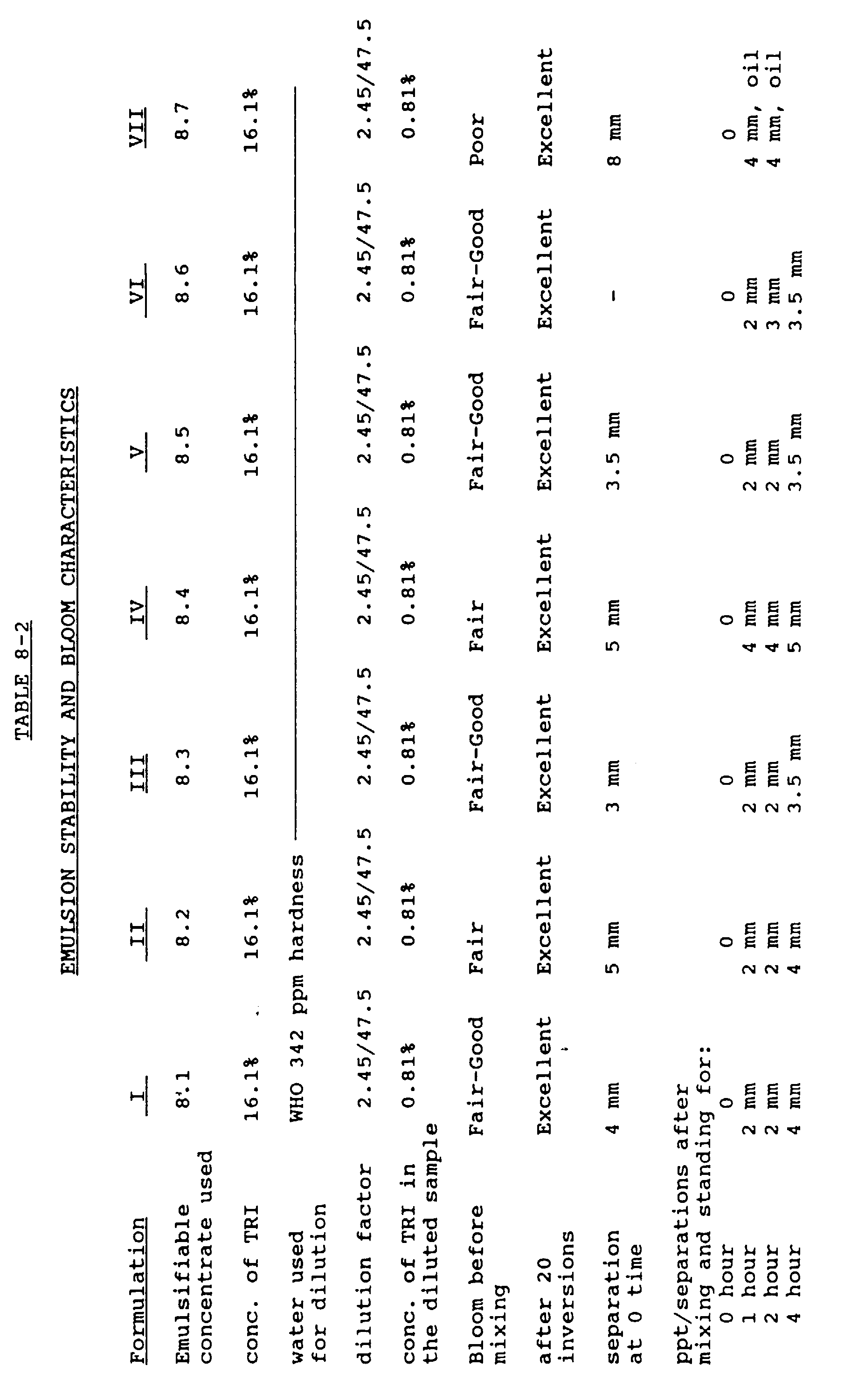

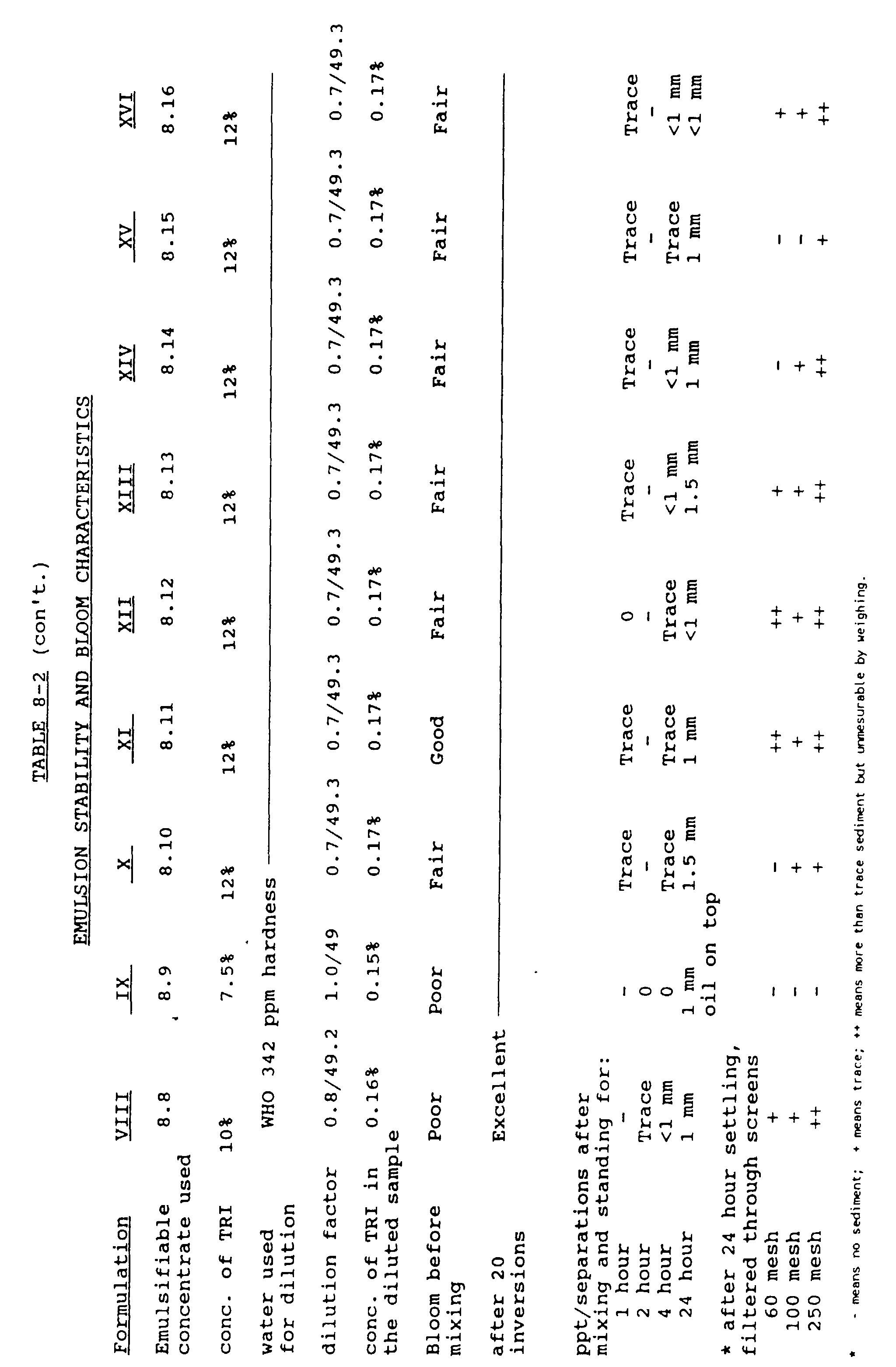

### Example 9

The following formulation 9.1 was prepared exactly as explained in Example 1, except that N-(2'-ethylhexylpyrrolidone) was used in the place of N-octlylpyrrolidone.

**TABLE 9-1**

| Formulation and % Composition | | |
|---|---|---|
| | | 9.1 |
| 1. | N-methylpyrrolidone | 33.0% |
| | | |
| 2. | N-(2'-ethylhexylpyrrolidone) | 15.0% |
| | | |
| 3. | Aromatic Petroleum oil - Exxon 200 | 12.0% |
| | | |
| 4. | PRL Tech. 92% (see Example 1) | 26.0% |
| | | |
| 5. | Gafac RE-610 (GAF) | 14.0% |
| | | |
| | TOTAL | $\overline{\text{100.0%}}$ |

This formulation did not freeze at 5°C. The ease of emulsification and stability on dilution are shown in Table 9-2.

**TABLE 9-2**

| Formulation | 9.1 |
|---|---|
| Conc. of PRL: | 26.0 % |
| | |
| Water used for dilution | WHO 342 PPM hardness |
| | |
| Dilution factor | 2.5g/47.5g |
| | |
| Conc. of PRL in the diluted sample | 1.3% |
| | |
| Bloom at 0 time | Excellent |
| | |
| Bloom after 20 inversions | Excellent |
| | |
| Separation of cream after 20 inversions and on standing after: | |
| 1 hour | Trace |
| 3 hours | <1 mm |
| 4 hours | <1 mm |
| 24 hours | <1 mm |

After standing for 24 hours, 20 inversions and filtration through 60 mesh, 100 mesh and 250 mesh screens, no sediment was left, even on a 250 mesh screen.

The following formulations, set out in Table 10 onwards further illustrate the invention and provide a comparison between the use of one solvent component and two solvent components in accordance with this invention.

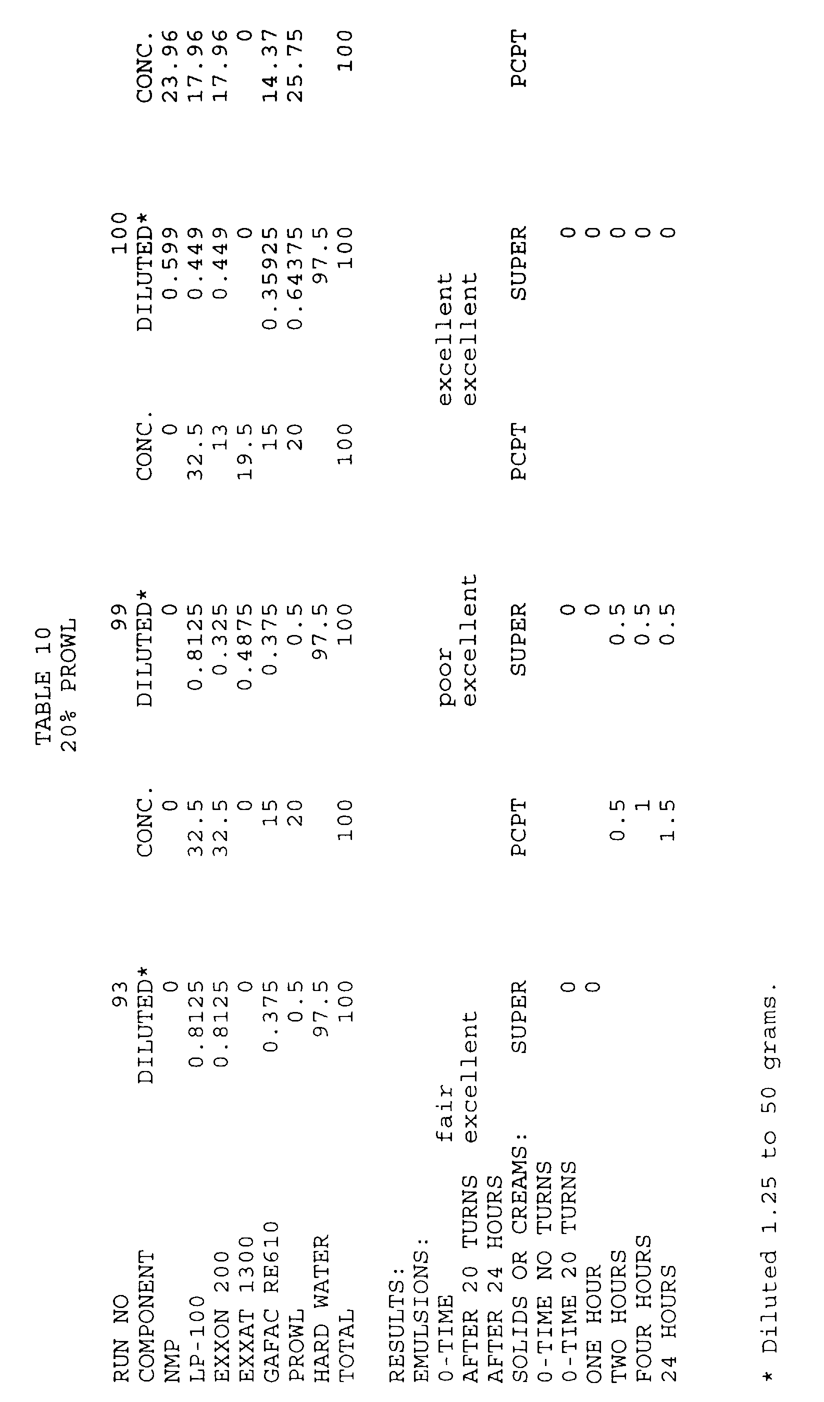

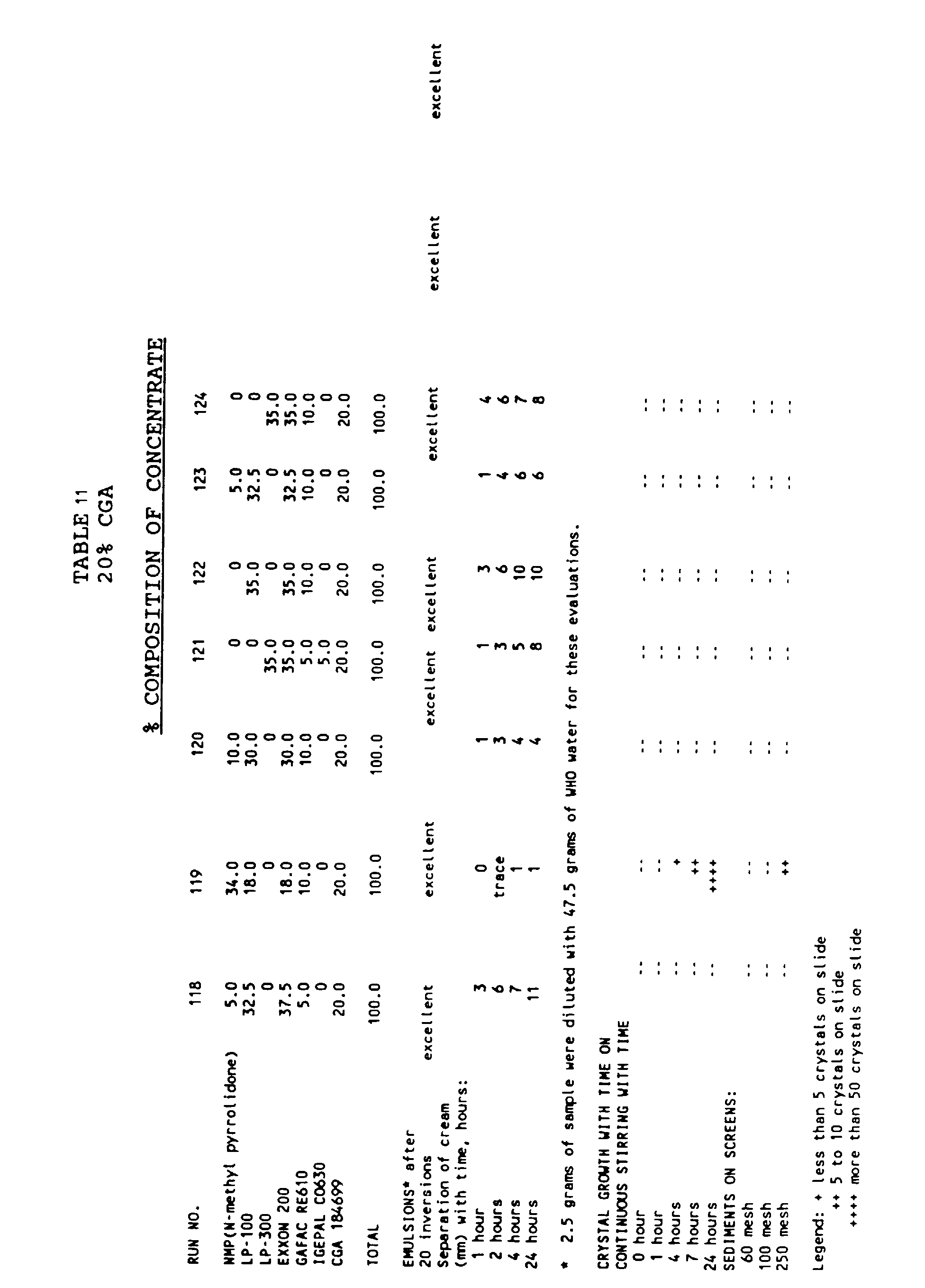

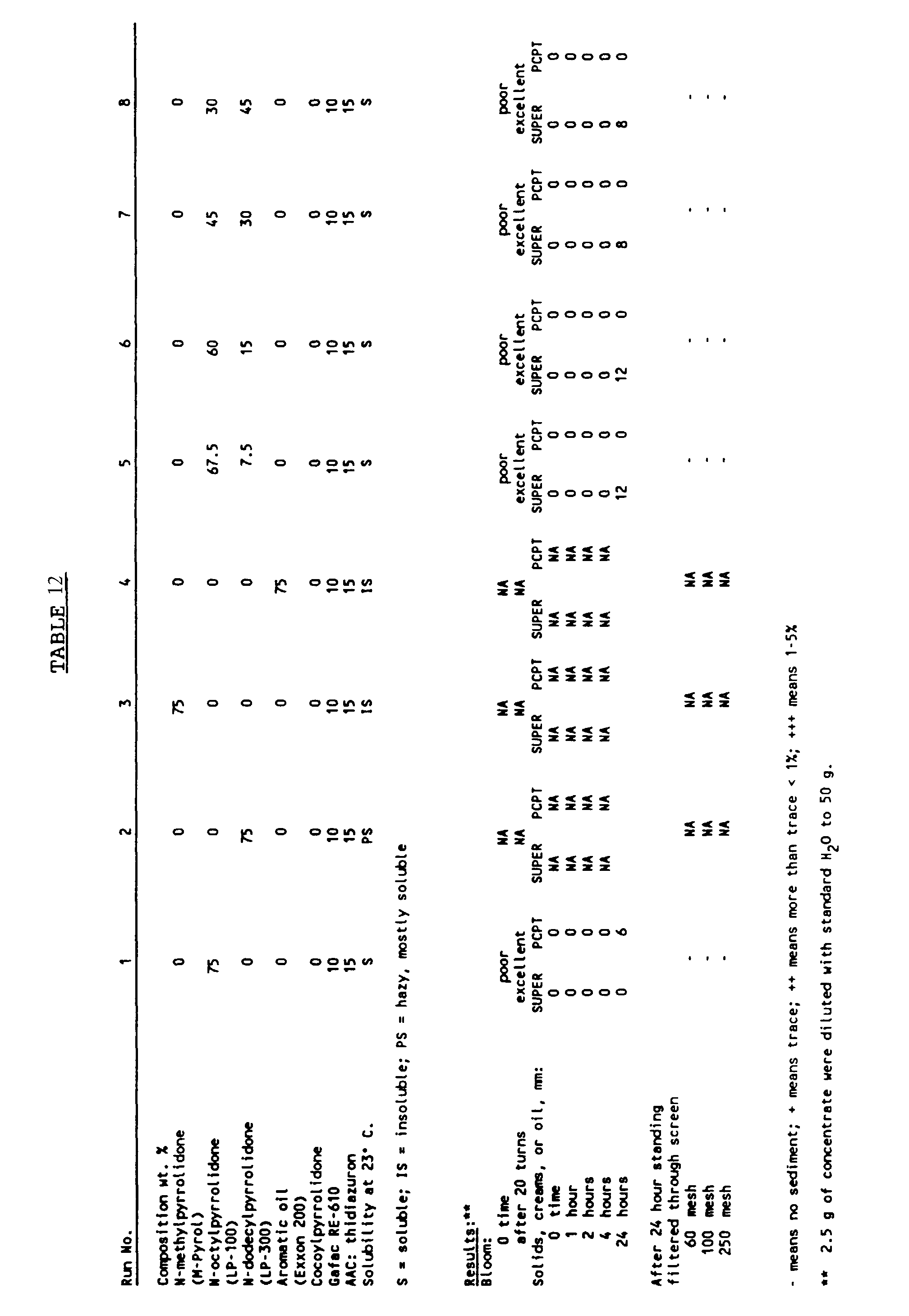

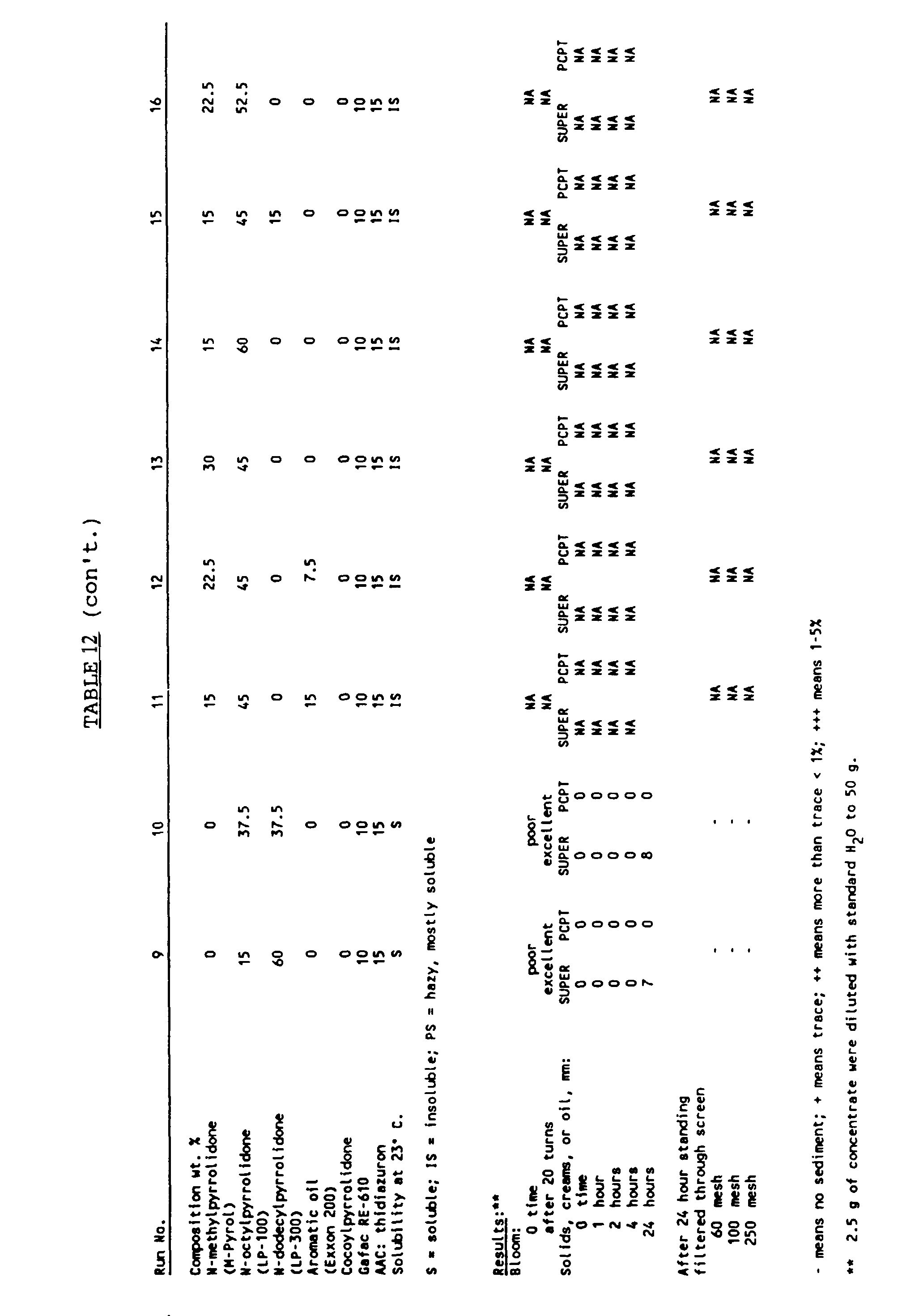

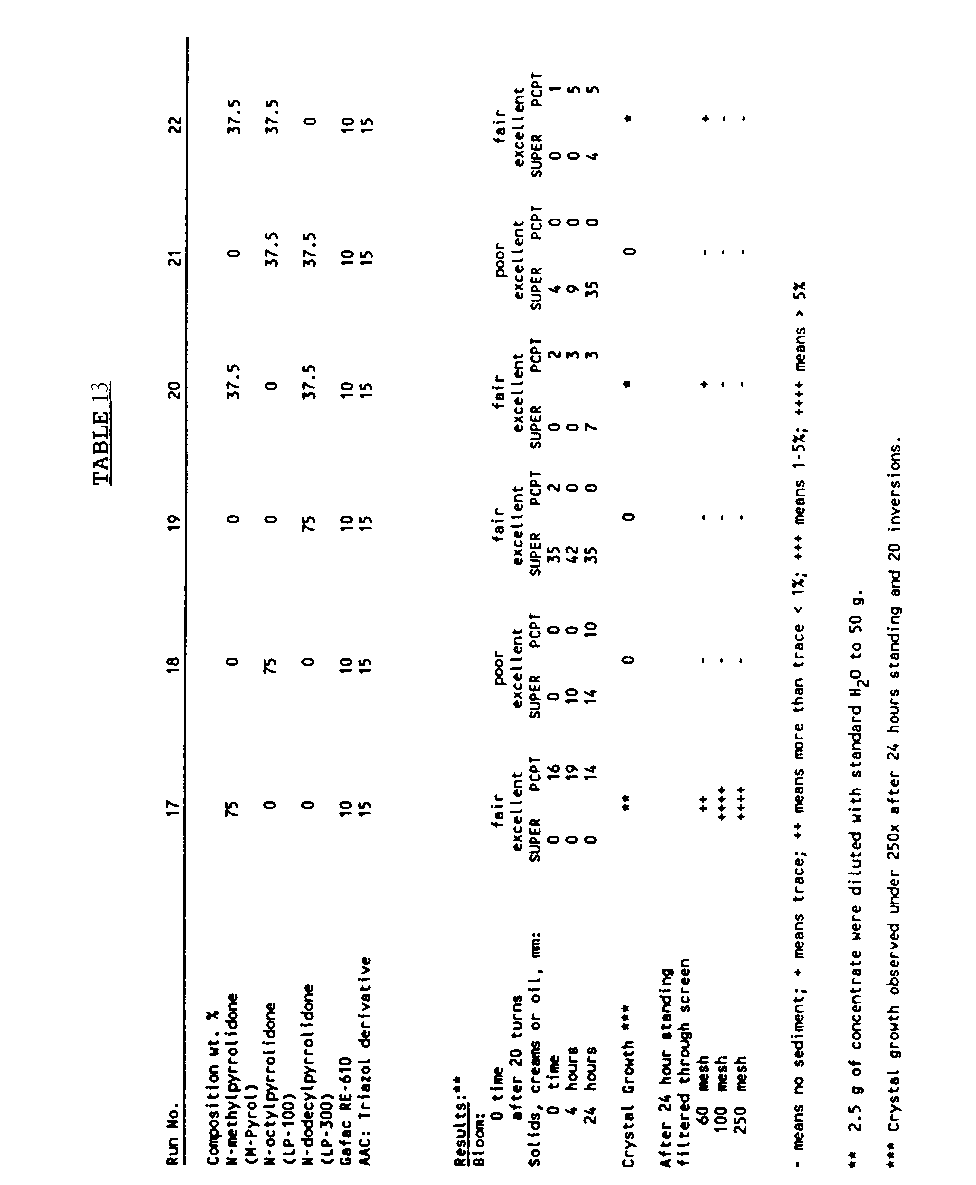

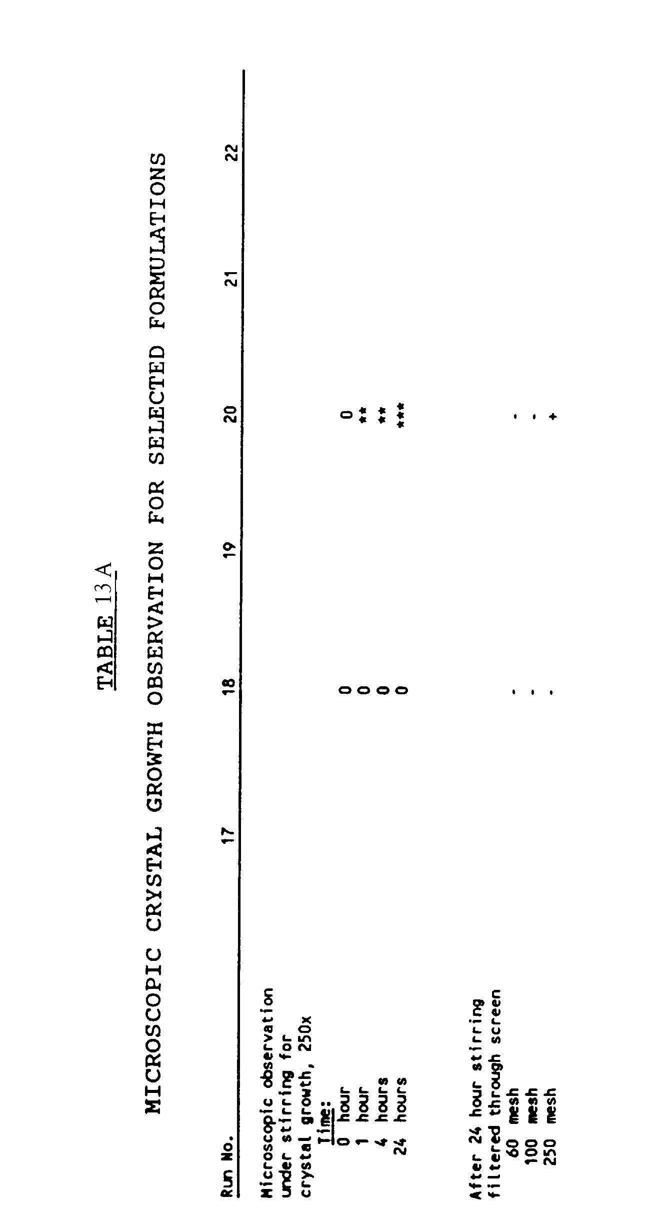

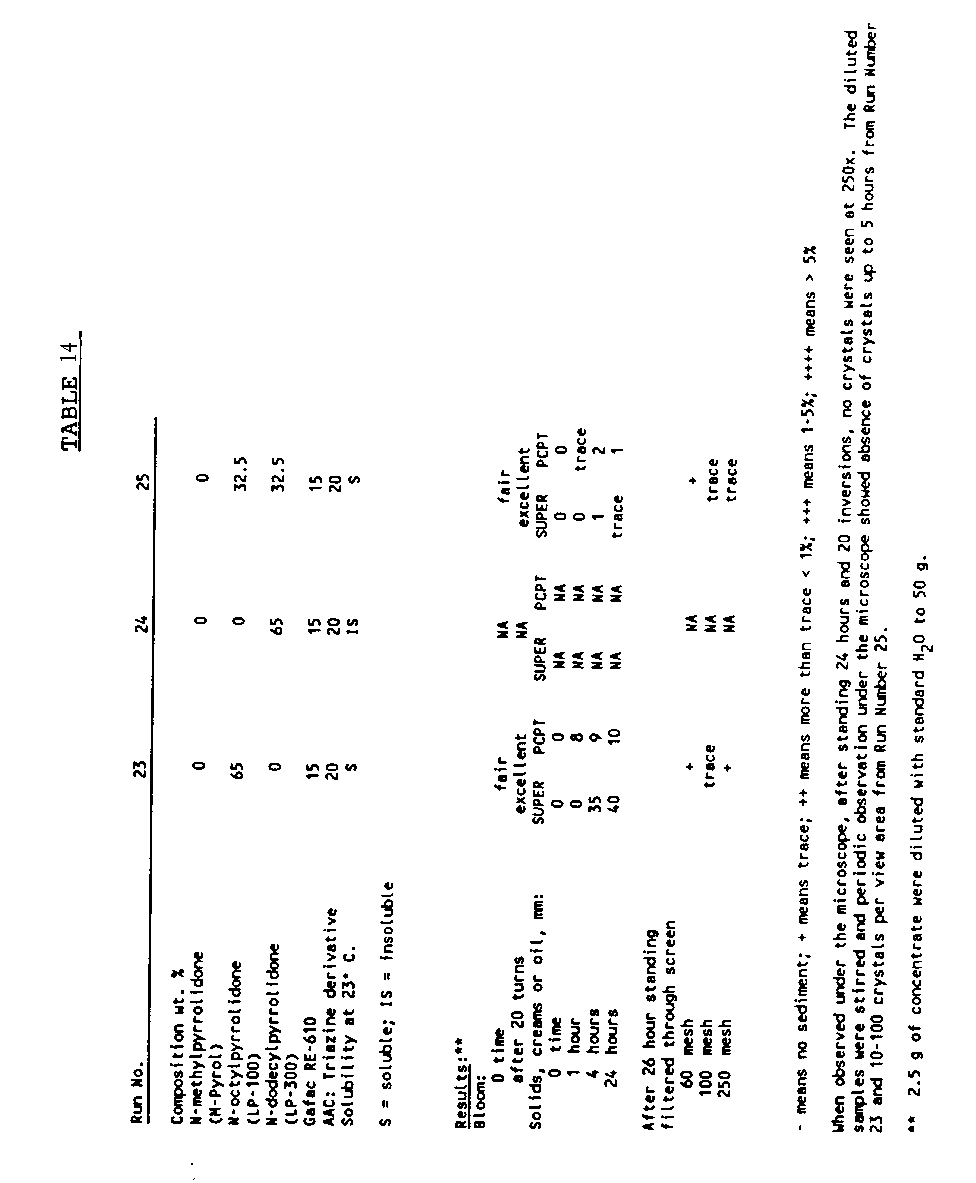

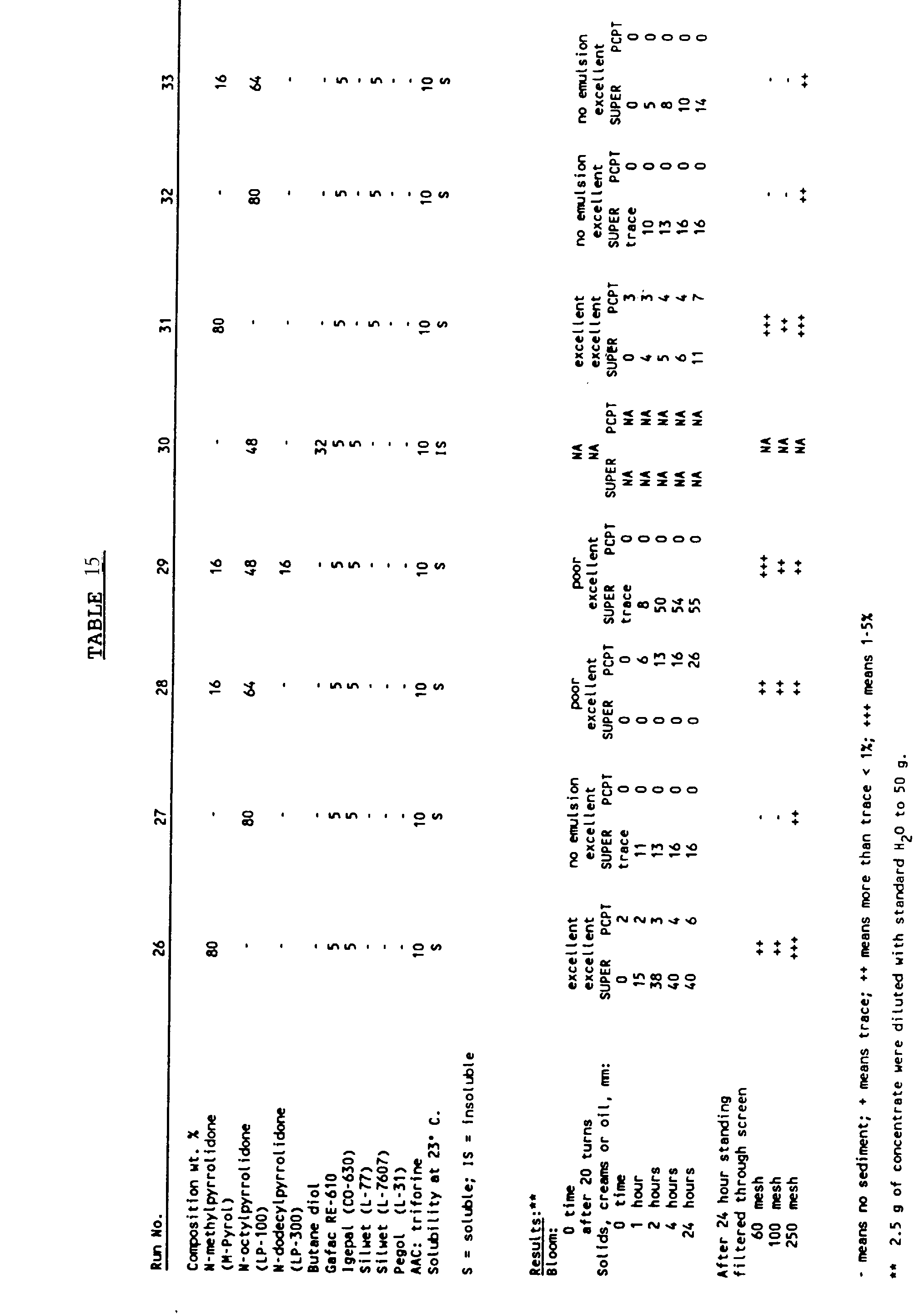

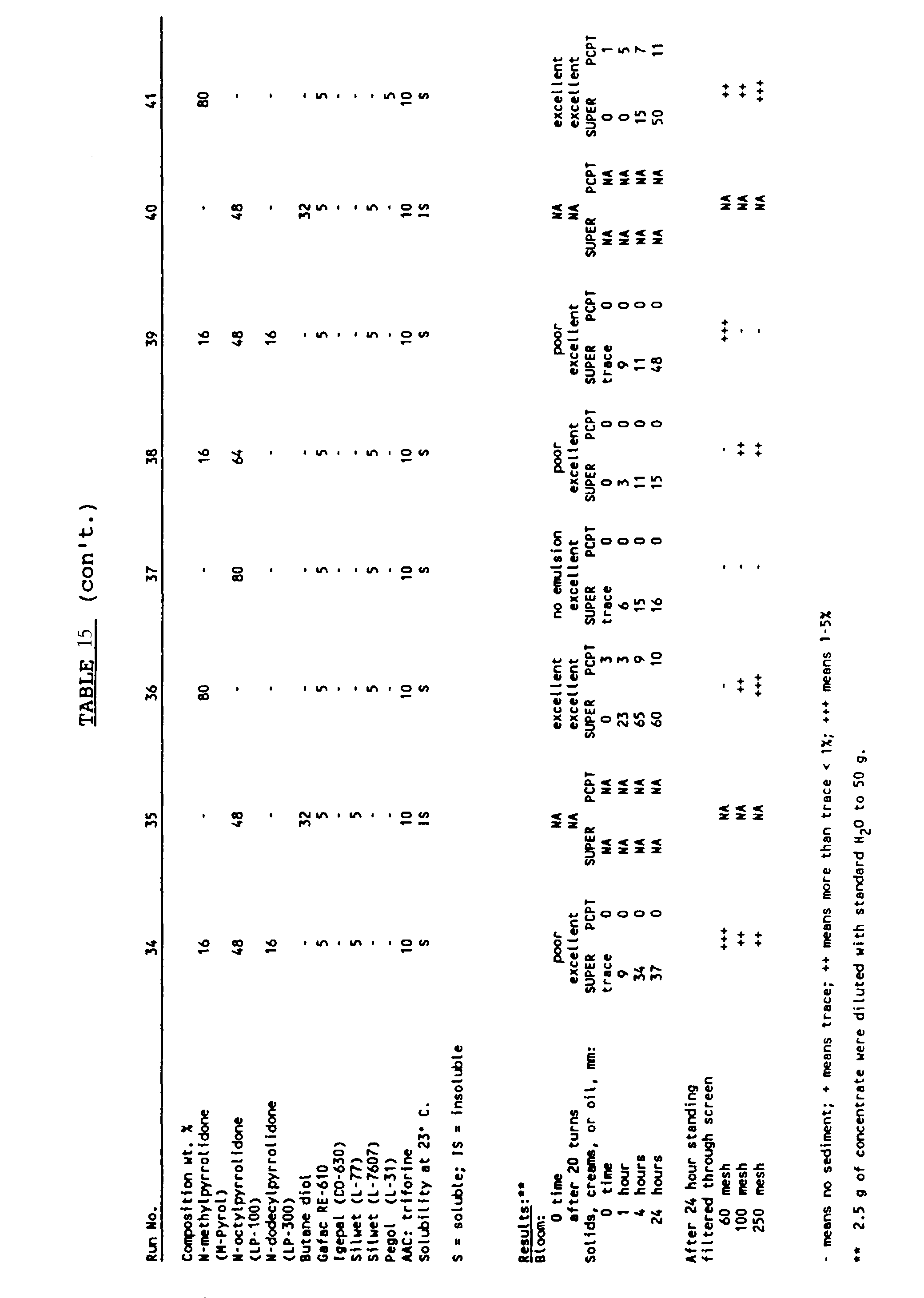

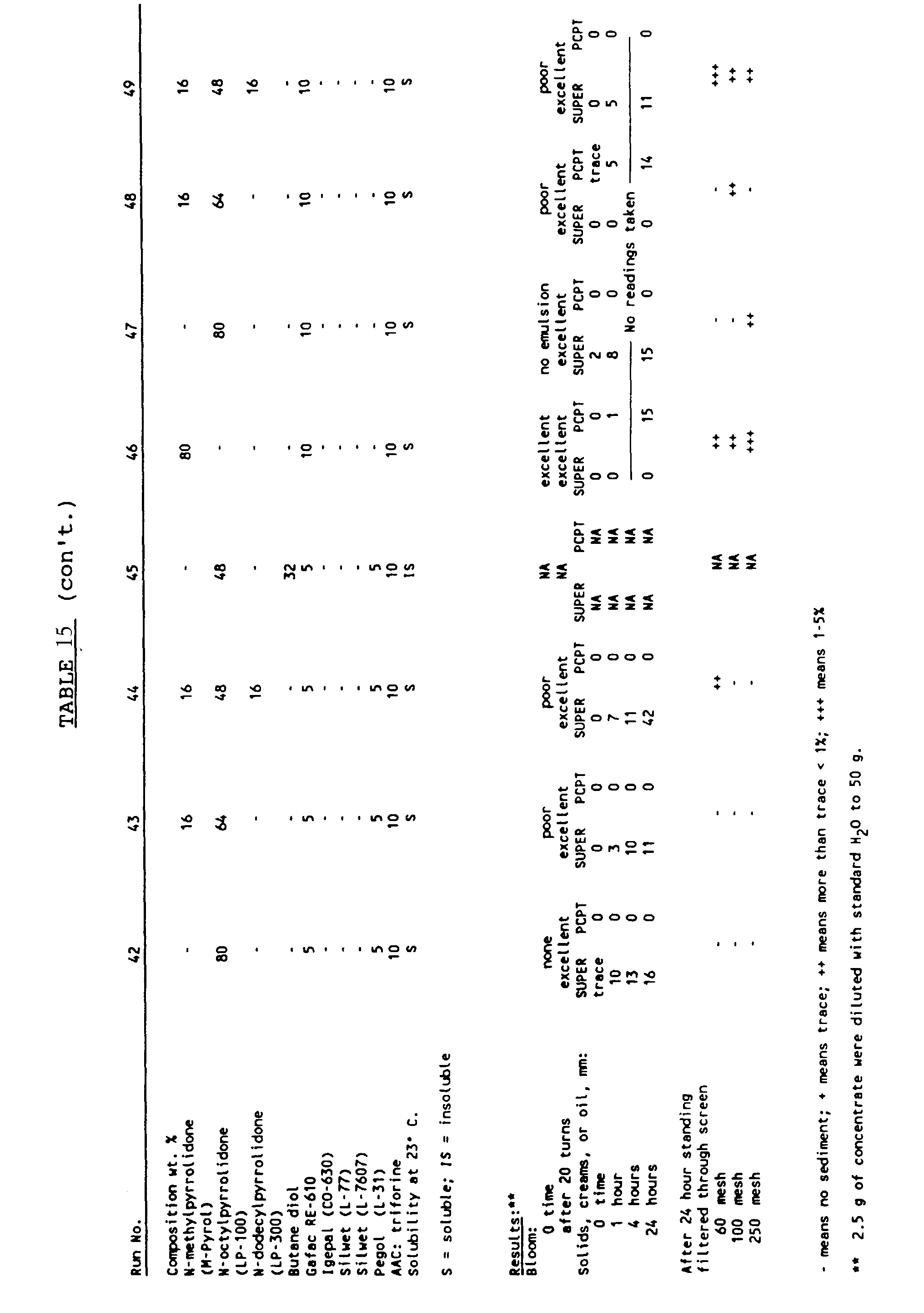

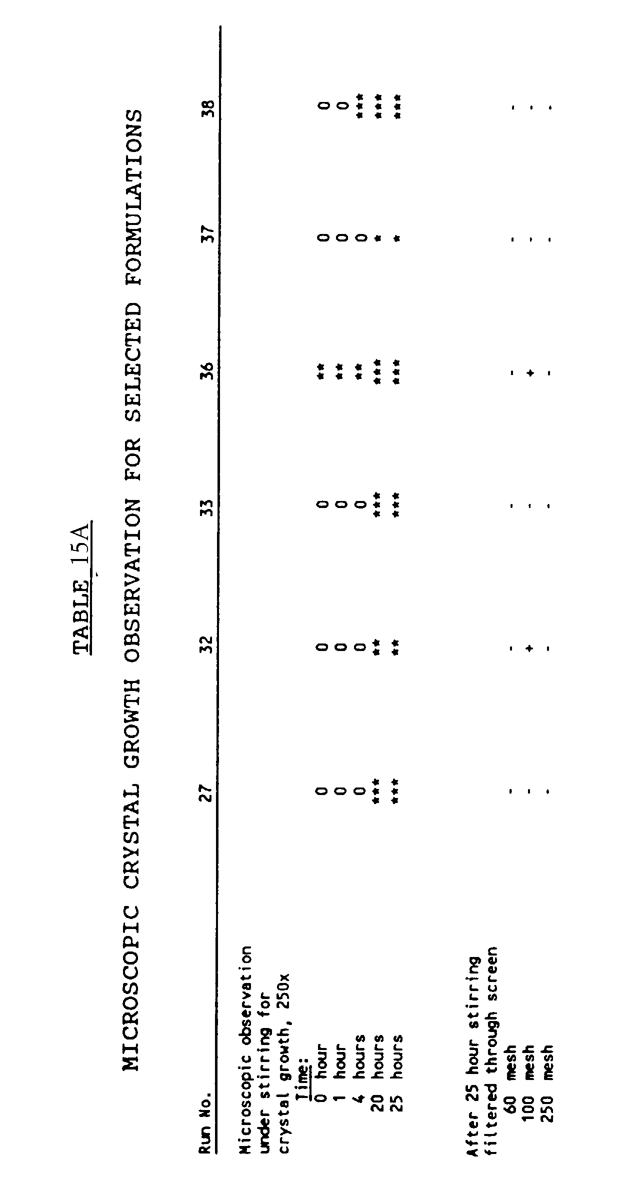

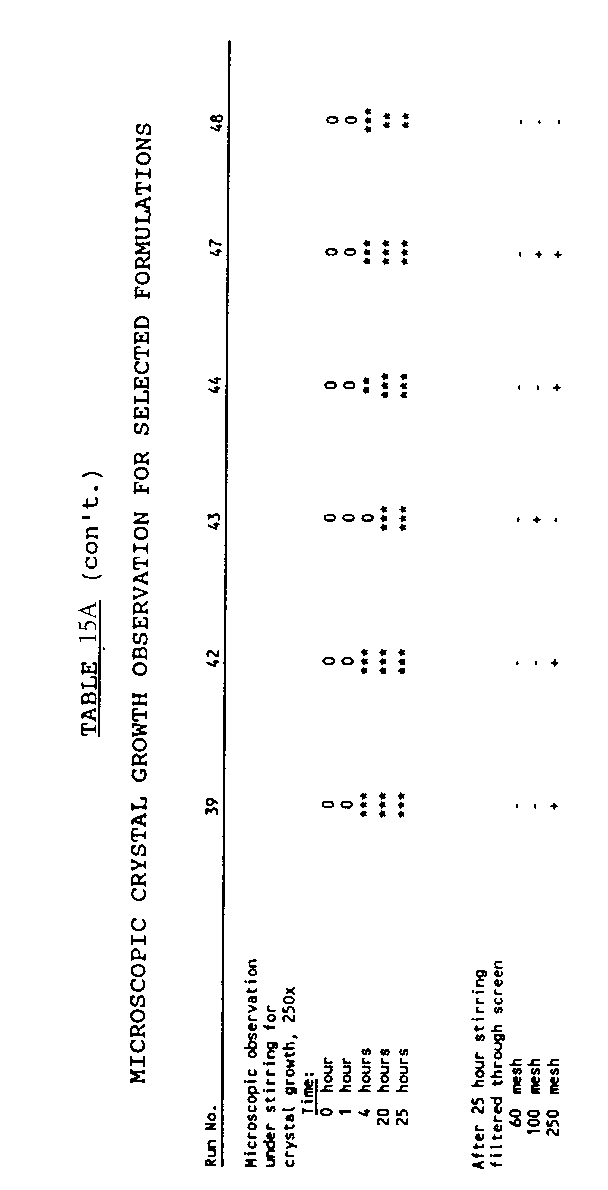

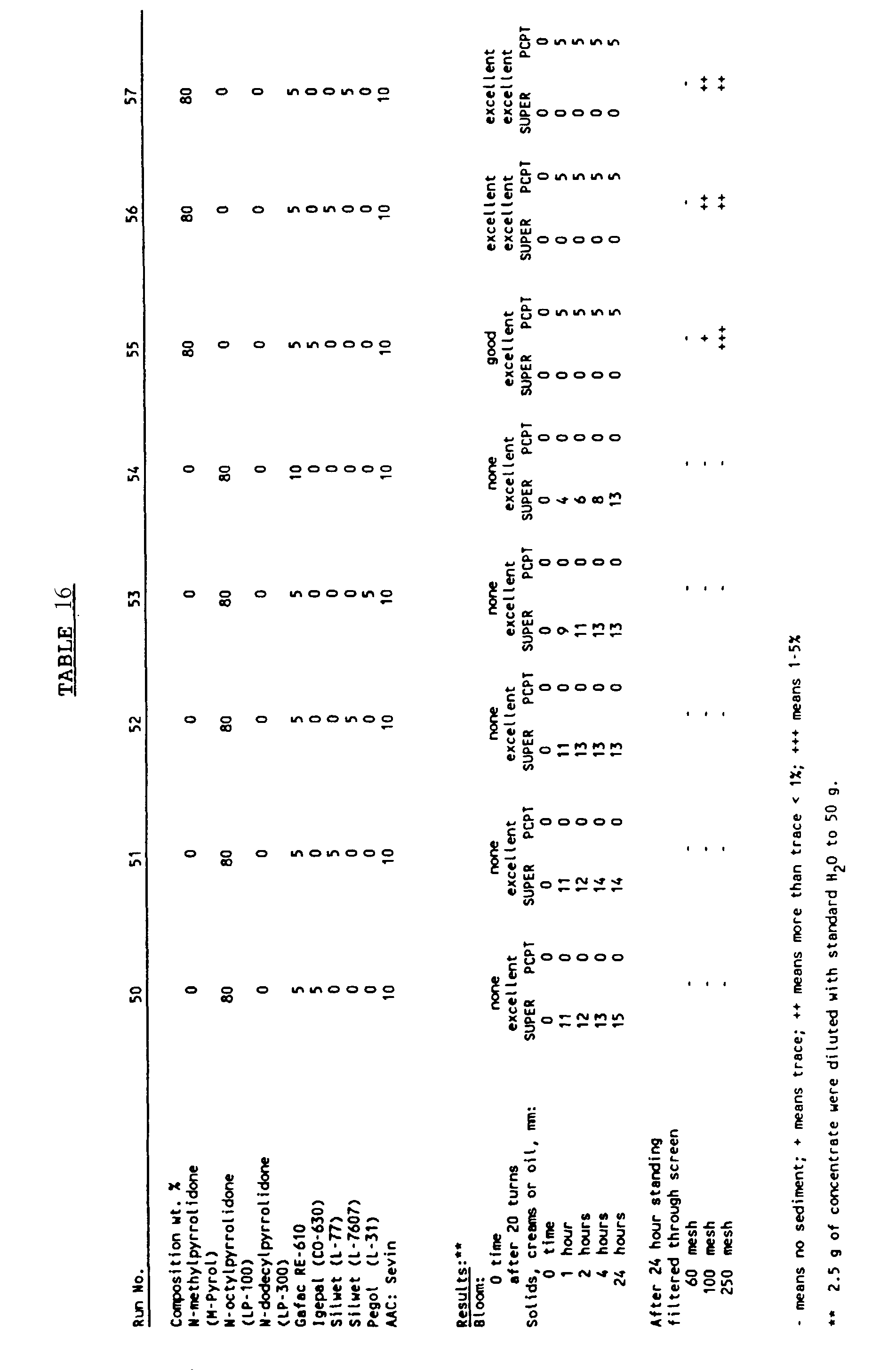

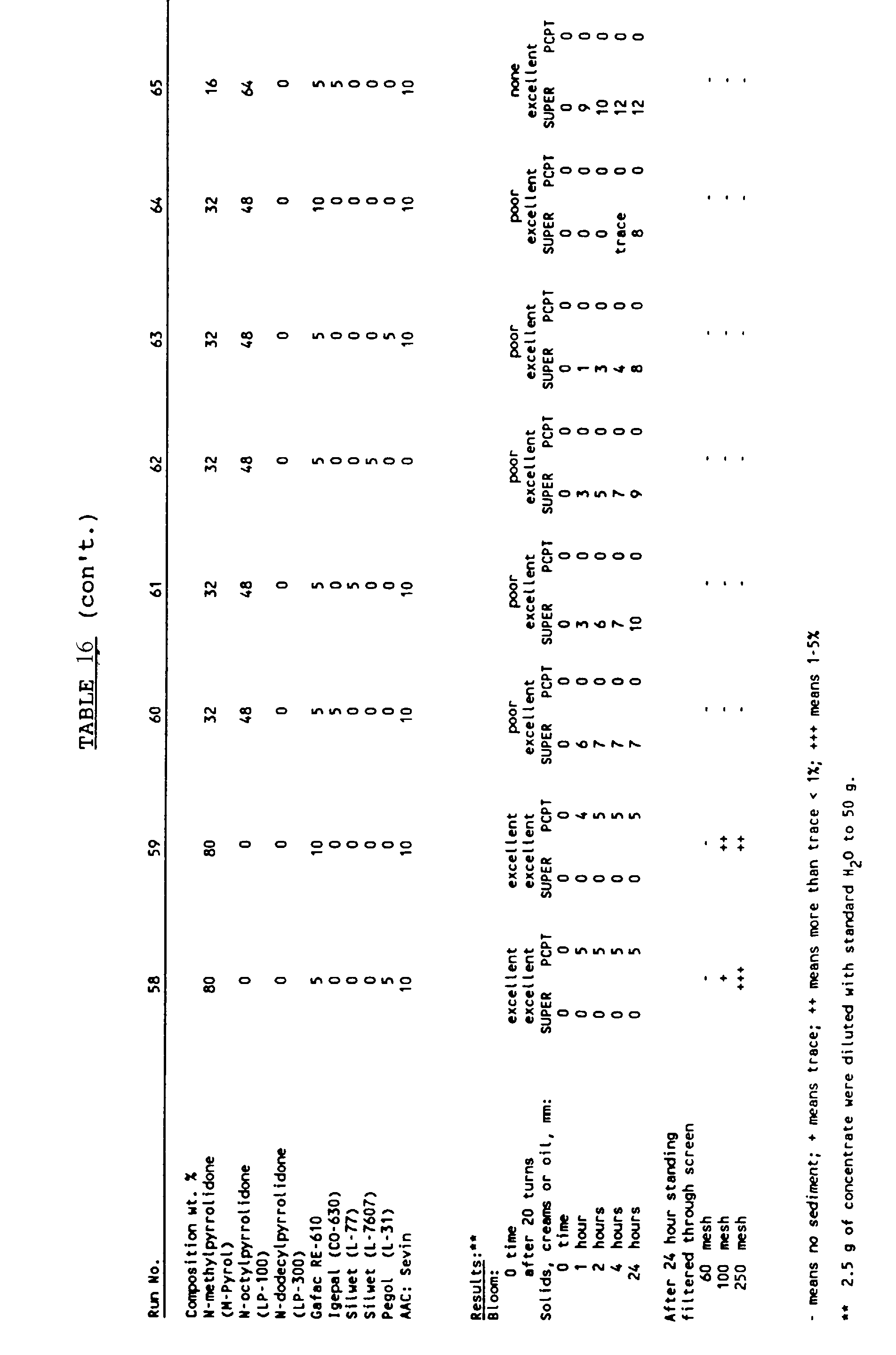

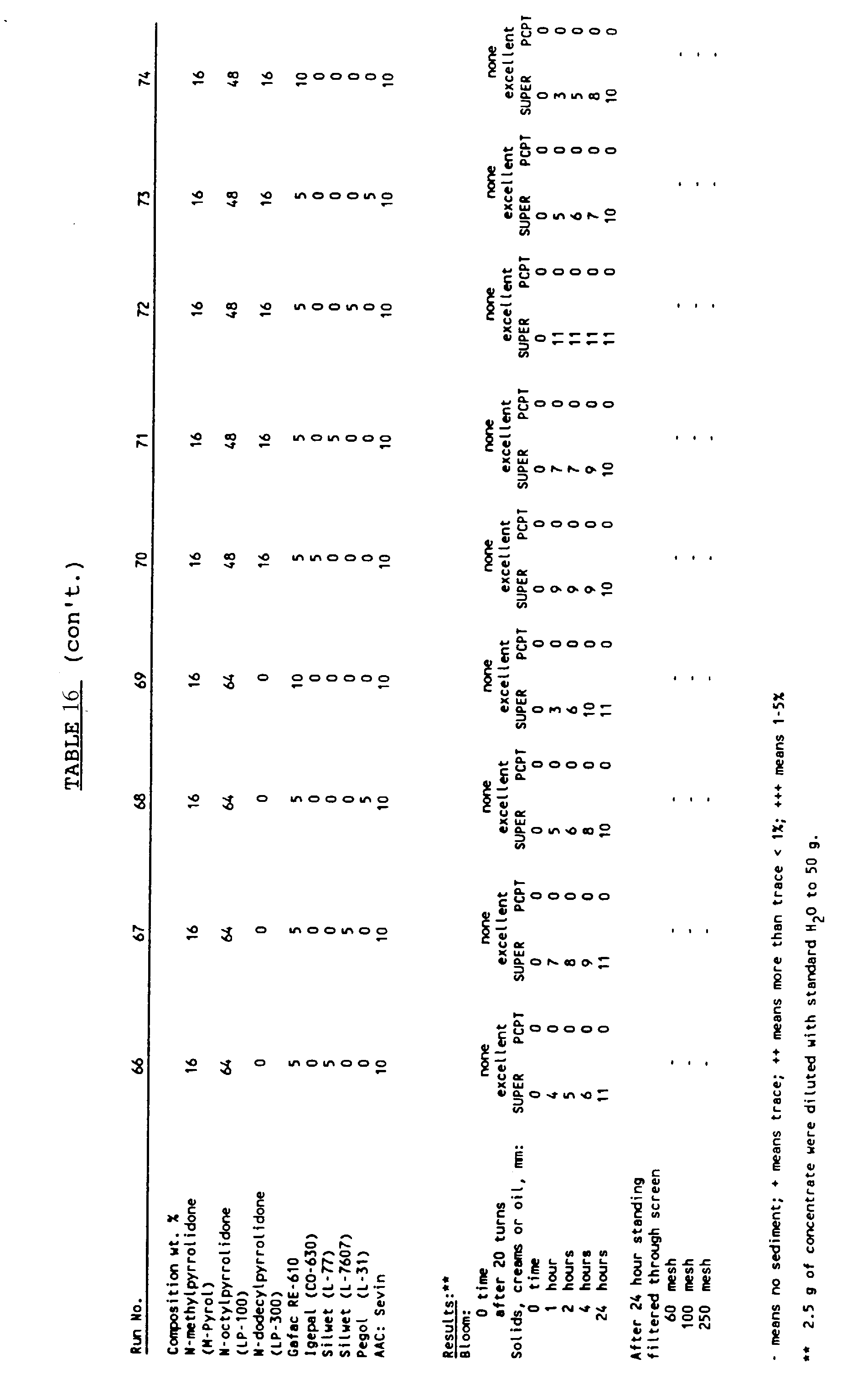

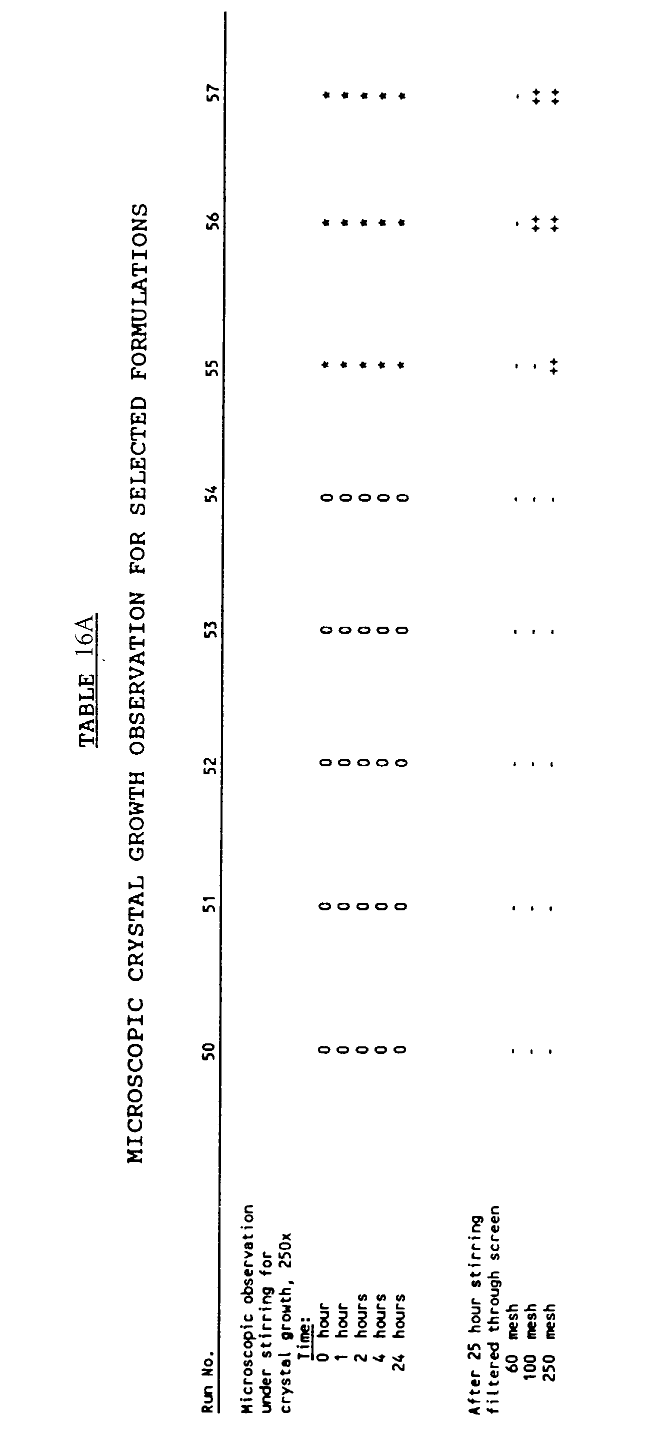

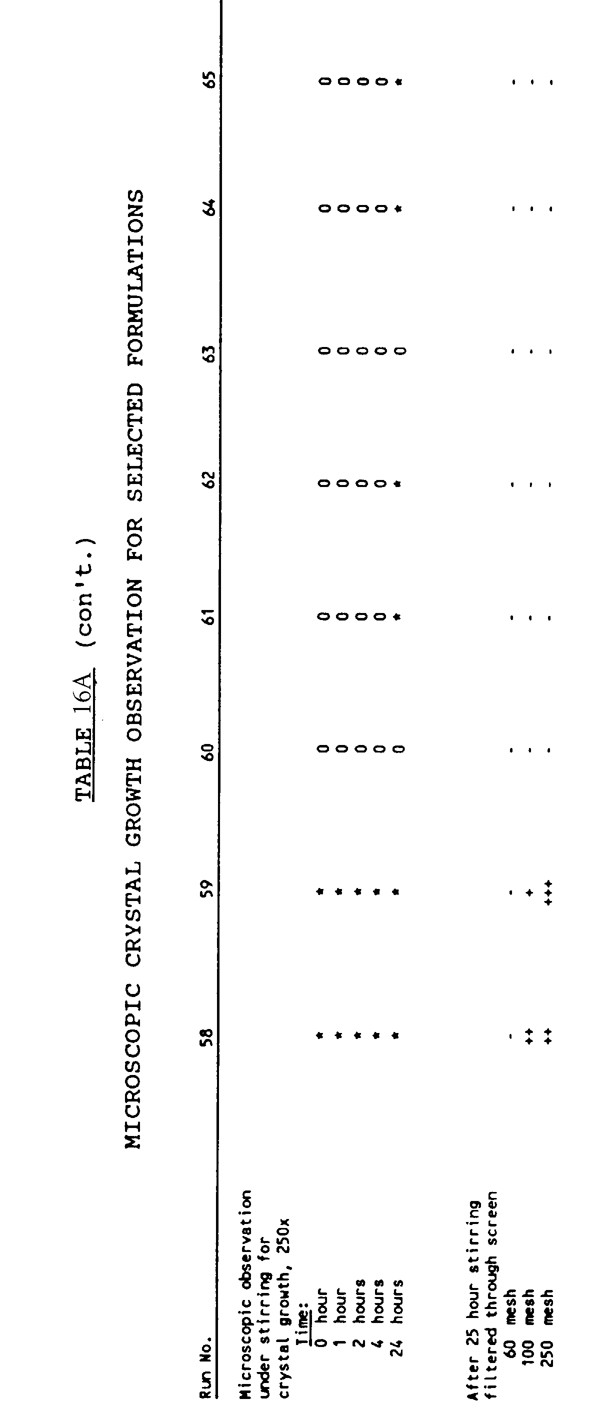

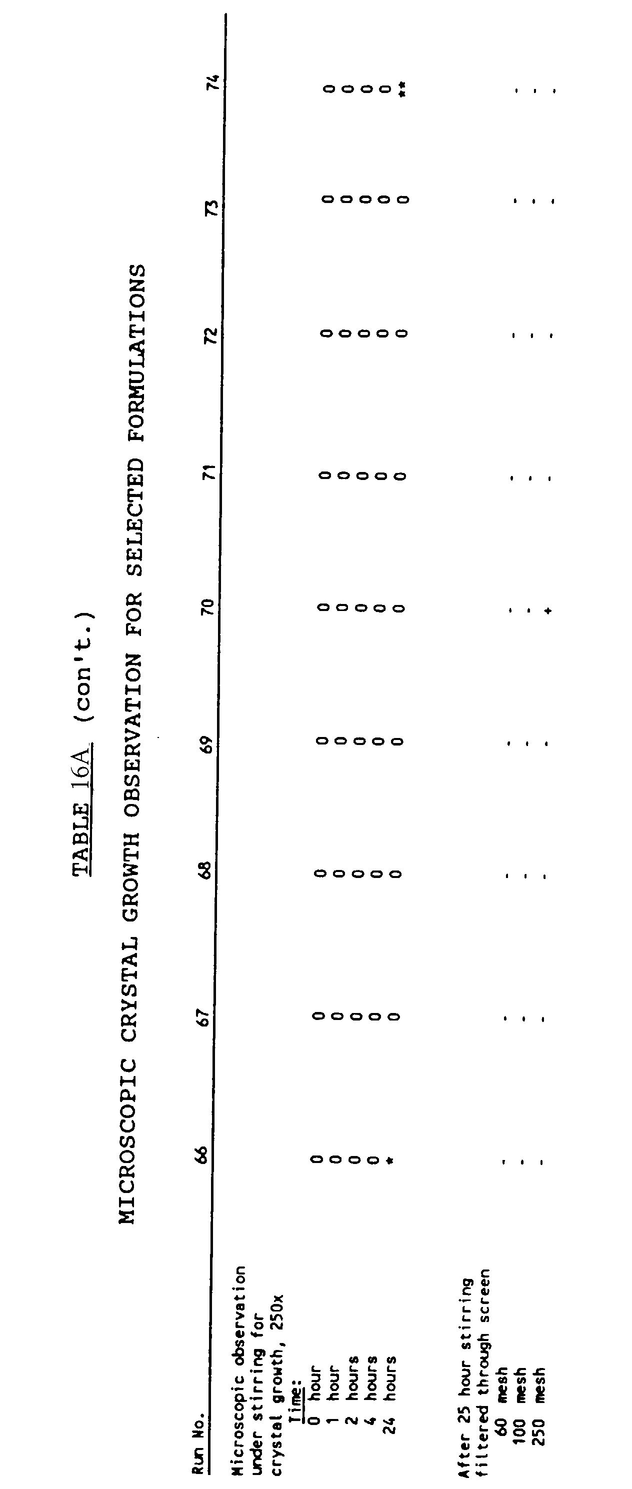

## Claims

1. A stable emulsifiable concentrate comprising an agriculturally active chemical which is substantially insoluble in water, a surfactant, an organic diluent, and a solvent composed of first and second components, the second component being a hydrophobic solvent having an HLB of from 2 to 8, the first component having a sufficiently high hydrophilic property and being present in an amount effective to solubilize the agriculturally active chemical in the concentrate, and having Hansen's solvent factors which are:
| HANSEN'S FACTOR | FIRST COMPONENT |
|---|---|
| Dispersive | 40 - 50% |
| Polarity | 25 - 40% |
| Hydrogen bonding | 10 - 30% |
and wherein the Hansen's solvent factors for the second component are:
| HANSEN'S FACTOR | SECOND COMPONENT |
|---|---|
| Dispersive | 56 - 75% |
| Polarity | 8 - 24% |
| Hydrogen bonding | 10 - 30% |

2. The concentrate of claim 1 wherein the amount of second component is 5-95% by weight of the solvent.

3. The concentrate of claim 1 or claim 2, wherein the first component is selected from the group consisting of pyrrolidones having the formula: 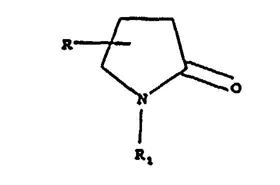 wherein R is hydrogen or lower alkyl and R₁ is lower alkyl wherein lower alkyl is an alkyl group having from 1 to 4 carbon atoms; cyclic lactones; lower alkylene cyclic carbonates, wherein lower alkylene is an alkylene group having from 1 to 4 carbon atoms; lower alkyl imidazolone, lower alkylamides of formic and acetic acid, and lower alkyl sulfoxides, wherein lower alkyl is an alkyl group having 1 or 2 carbon atoms.

4. The concentrate of claim 1 wherein the second component is selected from the group consisting of pyrrolidones having the formula 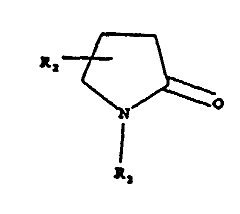
wherein R₂ is hydrogen or alkyl having from 6 to 14 carbon atoms and R₃ is alkyl having from 6 to 14 carbon atoms with the proviso that at least one of R₂ or R₃ must contain at least 6 carbon atoms and the sum of the carbon atoms in R₂ and R₃ cannot exceed 14;
alkyl gamma-butyrolactones, alkyl cyclic carbonates, and combinations thereof, wherein the alkyl portion may be distributed at one or more sites on the ring so long as one portion contains at least 6 carbon atoms and the total number of alkyl carbon atoms does not exceed 14.

5. The concentrate of claim 3 wherein the first component is selected from the group consisting of N-methylpyrrolidone, ethylene carbonate, propylene carbonate, butylene carbonate, N,N-dimethylimidazolone, dimethylformamide, dimethylacetamide, dimethylsulfoxide, and mixtures thereof.

6. The concentrate of claim 4 wherein the second component is selected from the group consisting of N-octylpyrrolidone, N-dodecylpyrrolidone, N-2-ethylhexyl-pyrrolidone, and mixtures thereof.

7. The concentrate of claim 5 wherein the first component is N-methylpyrrolidone.

8. The concentrate of any one of the preceding claims wherein the amount of the agriculturally active chemical is from 5% to 60% by weight based on the total weight of the concentrate.

9. The concentrate of any one of the preceding claims wherein the solvent is biodegradable.

10. The concentrate of any one of the preceding claims wherein the amount of solvent is in the range from 20 to 90% and the amount of diluent is in the range from 80 to 10%, each of these amounts being based on the total weight of solvent and diluent in the concentrate.

11. The concentrate of any one of the preceding claims wherein the organic diluent is an oil having a fractional dispersive solubility parameter of greater than 70% and a molar volume of greater than 90 cm³/mole.

12. The concentrate of claim 11 wherein the diluent is selected from the group consisting of soybean oil, rape seed oil, long chain alcohols, long chain ketones, long chain esters and ethers, and aromatic petroleum oils.

13. The concentrate of claim 11 wherein the diluent is an aromatic petroleum oil comprising about 60% heavy aromatic solvent naphtha and about 40% middle distillate solvent extractant.

14. The concentrate of any one of the preceding claims wherein the amount of surfactant is from 1 to 25% by weight based on the total weight of the concentrate.

15. The concentrate of any one of the preceding claims wherein the concentration of the agriculturally active chemical is in excess of 5 weight percent, based on the weight of the total concentrate.

16. The concentrate of any one of the preceding claims wherein the amount of the agriculturally active chemical is from 5% to 25% by weight based on the total weight of the concentrate.

17. The concentrate of any one of the preceding claims wherein the agriculturally active chemical is selected from the group consisting of fertilizers, plant nutrients, plant growth accelerants, herbicides, plant growth controlling agents, insecticides, bactericides, fungicides, nematocides, defoliants, and fumigants.

18. The concentrate of Claim 17 wherein the agriculturally active chemical is an insecticide selected from the group consisting of cyclo compounds, carbamates, animal and plant derivatives, synthetic pyrethoids, phenoxy compounds, organic phosphates, thiophosphates, and dithiophosphates.

19. The concentrate of Claim 17 wherein the agriculturally active chemical is an herbicide selected from the group consisting of phenoxy compounds, substituted benzoic acid, substituted acetic acid, phthalic acid derivatives, aniline derivatives, nitriles, amides, acetamides, anilides, carbamates, thiocarbamates, heterocyclic nitrogen derivatives, urea derivatives, and phosphates.

20. The concentrate of any one of claim 17 wherein the agriculturally active compound is a fungicide.

21. The concentrate of any one of claims 1 to 16 wherein the agriculturally active compound is a fumigant, growth regulator, repellent or rodenticide.

22. The concentrate of any one of claims 1 to 17 wherein agriculturally active compound is a pesticide.

23. A composition comprising the emulsifiable concentrate of any one of the preceding claims and water wherein the agriculturally active chemical is present in an effective agriculturally active amount.

24. A process for preparing a stable emulsifiable concentrate comprising mixing an agriculturally active chemical which is substantially insoluble in water, with a surfactant, an organic diluent and a solvent composed of first and second components, the second component being a hydrophobic solvent having an HLB value from 2 to 8 and the first component having a sufficiently high hydrophilic property and being present in an amount effective to solubilize the agriculturally active chemical in the concentrate, and wherein the Hansen's solvent factors for the first and second components are:
| Hansen's Factor | First Component | Second Component |
|---|---|---|
| dispersive | 40-50% | 56-75% |
| polarity | 25-40% | 8-24% |
| hydrogen bonding | 10-30% | 10-30% |

25. The process of claim 24 wherein the first component is selected from the group consisting of pyrrolidones having the formula 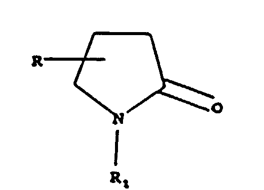 wherein R is hydrogen or lower alkyl and R₁ is lower alkyl, wherein lower alkyl is an alkyl group having from 1 to 4 carbon atoms; cyclic lactones; lower alkylene cyclic carbonates, wherein lower alkylene is an alkylene group having from 1 to 4 carbon atoms; lower alkyl imidazolone, lower alkylamides of formic and acetic acid, and lower alkyl sulfoxides, wherein lower alkyl is an alkyl group having 1 or 2 carbon atoms.

26. The process of claim 24 wherein the second component is selected from the group consisting of pyrrolidone having the formula 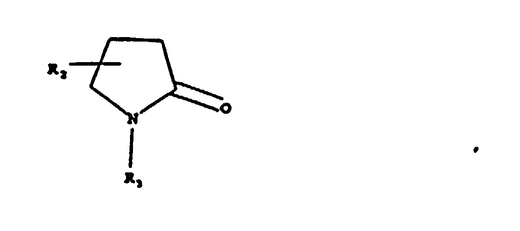
wherein R₂ is hydrogen or alkyl having from 6 to 14 carbon atoms and R₃ is alkyl having from 6 to 14 carbon atoms with the proviso that at least one of R₂ or R₃ must contain at least 6 carbon atoms and the sum of the carbon atoms in R₂ and R₃ cannot exceed 14;
alkyl gamma-butyrolactones, alkyl cyclic carbonates, and combinations thereof, wherein the alkyl portion may be distributed at one or more sites on the ring so long as one portion contains at least 6 carbon atoms and the total number of alkyl carbon atoms does not exceed 14.

27. The process of claim 24 wherein the first component is selected from the group consisting of N-methylpyrrolidone, ethylene carbonate, propylene carbonate butylene carbonate, N,N-dimethylimidazolone, dimethylformamide, dimethylacetamide, dimethylsulfoxide, and mixtures thereof.

28. The process of claim 26 wherein the second component is selected from the group consisting of N-octylpyrrolidone, N-dodecylpyrrolidone, N-2-ethylhexylpyrrolidone, and mixtures thereof.

29. The process of any one of claims 24 to 28 wherein the amount of solvent is in the range from 20 to 90% and the amount of diluent is in the range from 80 to 10%, each of these amounts being based on the total weight of solvent and diluent in the concentrate.

30. The process of claim 29 wherein the diluent is selected from the group consisting of soybean oil, rapeseed oil, long chain alcohols, long chain ketones, long chain esters and ethers, and aromatic petroleum oils.

31. The process of any one of claims 24 to 30 wherein the amount of surfactant is from 1 to 25% by weight based on the total weight of the concentrate.

32. The process of any one of claims 24 to 31 wherein the amount of the agriculturally active chemical is from 5% to 25% by weight based on the total weight of the concentrate.

33. The process of any one of claims 24 to 32 wherein the agriculturally active chemical is selected from the group consisting of fertilizers, plant nutrients, plant growth accelerants, herbicides, plant growth controlling agents, insecticides, bactericides, fungicides, nematocides, defoliants, and fumigants.

## Patentansprüche

1. Stabiles, emulgierbares Konzentrat, das eine landwirtschaftlich aktive Chemikalie, die im Wesentlichen unlöslich in Wasser ist, ein Tensid, einen organischen Verdünner und ein Lösungsmittel umfasst, das aus einer ersten und einer zweiten Komponente besteht, wobei die zweite Komponente ein hydrophobes Lösungsmittel mit einem HLB-Wert von 2 bis 8 ist, die erste Komponente ausreichend hohe Hydrophilie aufweist und in einer Menge enthalten ist, welche die Solubilisierung der landwirtschaftlich aktiven Chemikalie im Konzentrat bewirkt, und die folgenden Hansen-Lösungsmittelfaktoren aufweist:
| HANSEN-FAKTOR | ERSTE KOMPONENTE |
|---|---|
| Dispersität | 40 bis 50 % |
| Polarität | 25 bis 40 % |
| Wasserstoff-Brückenbindungen | 10 bis 30 % |
und worin die Hansen-Lösungsmittelfaktoren für die zweite Komponente folgende sind:
| HANSEN-FAKTOR | ZWEITE KOMPONENTE |
|---|---|
| Dispersität | 56 bis 75 % |
| Polarität | 8 bis 24 % |
| Wasserstoff-Brückenbindungen | 10 bis 30 % |

2. Konzentrat nach Anspruch 1, worin die Menge der zweiten Komponente 5 bis 95 Gew.-% des Lösungsmittels ausmacht.

3. Konzentrat nach Anspruch 1 oder 2, worin die erste Komponente aus der aus Pyrrolidonen der Formel: 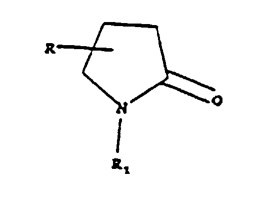 worin R Wasserstoff oder Niederalkyl ist und R₁ Niederalkyl ist, worin Niederalkyl eine Alkylgruppe mit 1 bis 4 Kohlenstoffatomen ist; zyklischen Lactonen; zyklischen Niederalkylencarbonaten, worin Niederalkylen eine Alkylengruppe mit 1 bis 4 Kohlenstoffatomen ist; Niederalkylimidazolonen, Ameisensäure- und Essigsäureniederalkylamiden sowie Niederalkylsulfoxiden, worin Niederalkyl eine Alkylgruppe mit 1 oder 2 Kohlenstoffatomen ist, bestehenden Gruppe ausgewählt ist.

4. Konzentrat nach Anspruch 1, worin die zweite Komponente aus der aus Pyrrolidonen der Formel: 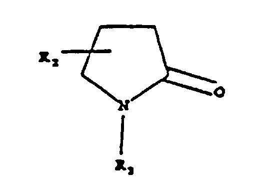 worin R₂ Wasserstoff oder Alkyl mit 6 bis 14 Kohlenstoffatomen ist und R₃ Alkyl mit 6 bis 14 Kohlenstoffatomen ist, mit der Maßgabe, dass zumindest eines von R₂ und R₃ zumindest 6 Kohlenstoffatome enthalten muss und die Summe der Kohlenstoffatome in R₂ und R₃ 14 nicht übersteigen kann; Alkyl-γ-butyrolactonen, zyklischen Alkylcarbonaten und Kombinationen davon bestehenden Gruppe ausgewählt ist, worin der Alkylabschnitt an einer Stelle liegen oder auf mehrere Stellen auf dem Ring verteilt sein kann, solange ein Abschnitt zumindest 6 Kohlenstoffatome enthält und die Gesamtanzahl an Alkyl-Kohlenstoffatomen 14 nicht übersteigt.

5. Konzentrat nach Anspruch 3, worin die erste Komponente aus der aus N-Methylpyrrolidon, Ethylencarbonat, Propylencarbonat, Butylencarbonat, N,N-Dimethylimidazolon, Dimethylformamid, Dimethylacetamid, Dimethylsulfoxid und Gemischen davon bestehenden Gruppe ausgewählt ist.

6. Konzentrat nach Anspruch 4, worin die zweite Komponente aus der aus N-Octylpyrrolidon, N-Dodecylpyrrolidon, N-2-Ethylhexylpyrrolidon und Gemischen davon bestehenden Gruppe ausgewählt ist.

7. Konzentrat nach Anspruch 5, worin die erste Komponente N-Methylpyrrolidon ist.

8. Konzentrat nach einem der vorangegangenen Ansprüche, worin die Menge der landwirtschaftlich aktiven Chemikalie 5 bis 60 Gew.-%, bezogen auf das Gesamtgewicht des Konzentrats, beträgt.

9. Konzentrat nach einem der vorangegangenen Ansprüche, worin das Lösungsmittel biologisch abbaubar ist.

10. Konzentrat nach einem der vorangegangenen Ansprüche, worin die Lösungsmittel-Menge im Bereich von 20 bis 90 Gew.-% und die Verdünner-Menge im Bereich von 80 bis 10 Gew.-%, jeweils bezogen auf das Gesamtgewicht von Lösungsmittel und Verdünner im Konzentrat, liegt.

11. Konzentrat nach einem der vorangegangenen Ansprüche, worin der organische Verdünner ein Öl mit einem Löslichkeitsparameter der fraktionellen Dispersität von über 70 % und einem Molvolumen von über 90 cm³/Mol ist.

12. Konzentrat nach Anspruch 11, worin der Verdünner aus der aus Sojabohnenöl, Rapsöl, langkettigen Alkoholen, langkettigen Ketonen, langkettigen Estern und Ethern sowie aromatischen Mineralölen bestehenden Gruppe ausgewählt ist.

13. Konzentrat nach Anspruch 11, worin der Verdünner ein aromatisches Mineralöl ist, das etwa 60 % schweres aromatisches Solventnaphtha und etwa 40 % Mitteldestillat-Solventextraktionsmittel umfasst.

14. Konzentrat nach einem der vorangegangenen Ansprüche, worin die Tensidmenge 1 bis 25 Gew.-%, bezogen auf das Gesamtgewicht des Konzentrats, beträgt.

15. Konzentrat nach einem der vorangegangenen Ansprüche, worin die Konzentration der landwirtschaftlich aktiven Chemikalie über 5 Gew.-%, bezogen auf das Gewicht des gesamten Konzentrats, liegt.

16. Konzentrat nach einem der vorangegangenen Ansprüche, worin die Menge der landwirtschaftlich aktiven Chemikalie 5 bis 25 Gew.-%, bezogen auf das Gesamtgewicht des Konzentrats, beträgt.

17. Konzentrat nach einem der vorangegangenen Ansprüche, worin die landwirtschaftlich aktive Chemikalie aus der aus Düngemitteln, Pflanzennährstoffen, Pflanzenwachstumsbeschleunigern, Herbiziden, Pflanzenwachstumshemmern, Insektiziden, Bakteriziden, Fungiziden, Nematoziden, Entlaubungsmitteln und Fumiganten bestehenden Gruppe ausgewählt ist.

18. Konzentrat nach Anspruch 17, worin die landwirtschaftlich aktive Chemikalie ein Insektizid ist, das aus der aus Cyclo-Verbindungen, Carbamaten, Tier- und Pflanzenderivaten, synthetischen Pyrethroiden, Phenoxyverbindungen, organischen Phosphaten, Thiophosphaten und Dithiophosphaten bestehenden Gruppe ausgewählt ist.

19. Konzentrat nach Anspruch 17, worin die landwirtschaftlich aktive Chemikalie ein Herbizid ist, das aus der aus Phenoxyverbindungen, substituierter Benzoesäure, substituierter Essigsäure, Phthalsäurederivaten, Anilinderivaten, Nitrilen, Amiden, Acetamiden, Aniliden, Carbamaten, Thiocarbamaten, heterozyklischen Stickstoffderivaten, Harnstoffderivaten und Phosphaten bestehenden Gruppe ausgewählt ist.

20. Konzentrat nach Anspruch 17, worin die landwirtschaftlich aktive Verbindung ein Fungizid ist.

21. Konzentrat nach einem der Ansprüche 1 bis 16, worin die landwirtschaftlich aktive Verbindung ein Fumigant, ein Wachstumsregler, ein Repellent oder ein Rodentizid ist.

22. Konzentrat nach einem der Ansprüche 1 bis 17, worin die landwirtschaftlich aktive Verbindung ein Pestizid ist.

23. Zusammensetzung, die ein emulgierbares Konzentrat nach einem der vorangegangenen Ansprüche und Wasser umfasst, worin die landwirtschaftlich aktive Chemikalie in einer wirksamen landwirtschaftlich aktiven Menge enthalten ist.

24. Verfahren zur Herstellung eines stabilen emulgierbaren Konzentrats, umfassend das Vermischen einer landwirtschaftlich aktiven Chemikalie, die im Wesentlichen unlöslich in Wasser ist, mit einem Tensid, einem organischen Verdünner und einem Lösungsmittel, das aus einer ersten und einer zweiten Komponente besteht, wobei die zweite Komponente ein hydrophobes Lösungsmittel mit einem HLB-Wert von 2 bis 8 ist, die erste Komponente ausreichend hohe Hydrophilie aufweist und in einer Menge enthalten ist, welche die Solubilisierung der landwirtschaftlich aktiven Chemikalie im Konzentrat bewirkt, und worin die Hansen-Lösungsmittelfaktoren für die erste und zweite Komponente folgende sind:
| HANSEN-FAKTOR | ERSTE KOMPONENTE | ZWEITE KOMPONENTE |
|---|---|---|
| Dispersität | 40 bis 50 % | 56 bis 75 % |
| Polarität | 25 bis 40 % | 8 bis 24 % |
| Wasserstoff-Brückenbindung | 10 bis 30 % | 10 bis 30 %. |

25. Verfahren nach Anspruch 24, worin die erste Komponente aus der aus Pyrrolidonen der Formel: 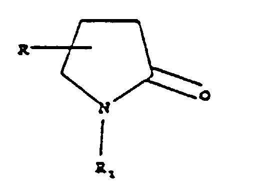 worin R Wasserstoff oder Niederalkyl ist und R₁ Niederalkyl ist, worin Niederalkyl eine Alkylgruppe mit 1 bis 4 Kohlenstoffatomen ist; zyklischen Lactonen; zyklischen Niederalkylencarbonaten, worin Niederalkylen eine Alkylengruppe mit 1 bis 4 Kohlenstoffatomen ist; Niederalkylimidazolonen, Ameisensäure- und Essigsäureniederalkylamiden sowie Niederalkylsulfoxiden, worin Niederalkyl eine Alkylgruppe mit 1 oder 2 Kohlenstoffatomen ist, bestehenden Gruppe ausgewählt ist.

26. Verfahren nach Anspruch 24, worin die zweite Komponente aus der aus Pyrrolidonen der Formel: 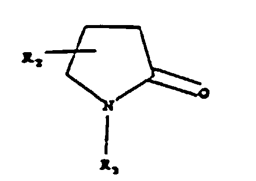
worin R₂ Wasserstoff oder Alkyl mit 6 bis 14 Kohlenstoffatomen ist und R₃ Alkyl mit 6 bis 14 Kohlenstoffatomen ist, mit der Maßgabe, dass zumindest eines von R₂ und R₃ zumindest 6 Kohlenstoffatome enthalten muss und die Summe der Kohlenstoffatome in R₂ und R₃ 14 nicht übersteigen kann;
Alkyl-γ-butyrolactonen, zyklischen Alkylcarbonaten und Kombinationen davon bestehenden Gruppe ausgewählt ist, worin der Alkylabschnitt an einer Stelle liegen oder auf mehrere Stellen auf dem Ring verteilt sein kann, solange ein Abschnitt zumindest 6 Kohlenstoffatome enthält und die Gesamtanzahl an Alkyl-Kohlenstoffatomen 14 nicht übersteigt.

27. Verfahren nach Anspruch 24, worin die erste Komponente aus der aus N-Methylpyrrolidon, Ethylencarbonat, Propylencarbonat, Butylencarbonat, N,N-Dimethylimidazolon, Dimethylformamid, Dimethylacetamid, Dimethylsulfoxid und Gemischen davon bestehenden Gruppe ausgewählt ist.

28. Verfahren nach Anspruch 26, worin die zweite Komponente aus der aus N-Octylpyrrolidon, N-Dodecylpyrrolidon, N-2-Ethylhexylpyrrolidon und Gemischen davon bestehenden Gruppe ausgewählt ist.

29. Verfahren nach einem der Ansprüche 24 bis 28, worin die Lösungsmittel-Menge im Bereich von 20 bis 90 Gew.-% und die Verdünner-Menge im Bereich von 80 bis 10 Gew.-%, jeweils bezogen auf das Gesamtgewicht von Lösungsmittel und Verdünner im Konzentrat, liegt.

30. Verfahren nach Anspruch 29, worin der Verdünner aus der aus Sojabohnenöl, Rapsöl, langkettigen Alkoholen, langkettigen Ketonen, langkettigen Estern und Ethern sowie aromatischen Mineralölen bestehenden Gruppe ausgewählt ist.

31. Verfahren nach einem der Ansprüche 24 bis 30, worin die Tensidmenge 1 bis 25 Gew.-%, bezogen auf das Gesamtgewicht des Konzentrats, beträgt.

32. Verfahren nach einem der Ansprüche 24 bis 31, worin die Menge der landwirtschaftlich aktiven Chemikalie 5 bis 25 Gew.-%, bezogen auf das Gesamtgewicht des Konzentrats, beträgt.

33. Verfahren nach einem der Ansprüche 24 bis 32, worin die landwirtschaftlich aktive Chemikalie aus der aus Düngemitteln, Pflanzennährstoffen, Pflanzenwachstumsbeschleunigern, Herbiziden, Pflanzenwachstumshemmern, Insektiziden, Bakteriziden, Fungiziden, Nematoziden, Entlaubungsmitteln und Fumiganten bestehenden Gruppe ausgewählt ist.

## Revendications

1. Concentré émulsifiable stable comprenant un produit chimique actif pour l'agriculture qui est sensiblement insoluble dans l'eau, un agent tensioactif, un diluant organique et un solvant composé de premier et second composants, le second composant étant un solvant hydrophobe ayant une valeur de HLB de 2 à 8, le premier composant ayant des propriétés hydrophiles suffisamment élevées et étant présent en une quantité efficace pour solubiliser le produit chimique actif pour l'agriculture dans le concentré, et ayant des facteurs de solvant de Hansen qui sont :
| FACTEUR DE HANSEN | PREMIER COMPOSANT |
|---|---|
| Dispersant | 40 - 50% |
| Polarité | 25 - 40% |
| Liaison hydrogène | 10 - 30% |
et où les facteurs de solvant de Hansen pour le second composant sont de :
| FACTEUR DE HANSEN | SECOND COMPOSANT |
|---|---|
| Dispersant | 56 - 75% |
| Polarité | 8 - 24% |
| Liaisons hydrogène | 10 - 30% |

2. Concentré de la revendication 1, où la quantité du second composant est de 5-95% en poids du solvant.

3. Concentré de la revendication 1 ou la revendication 2, où le premier composant est sélectionné dans le groupe consistant en des pyrrolidones ayant la formule : 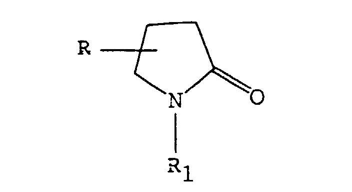 où R est de l'hydrogène ou un alkyle inférieur et R₁ est un alkyle inférieur où alkyle inférieur est un groupe alkyle ayant de 1 à 4 atomes de carbone ; des lactones cycliques ; des carbonates cycliques d'alkylènes inférieurs où alkylène inférieur est un groupe alkylène ayant de 1 à 4 atomes de carbone ; alkyle inférieur d'imidazolone, alkylamides inférieurs de l'acide formique et acétique et alkyl sulfoxydes inférieurs où alkyle inférieur est un groupe alkyle ayant 1 ou 2 atomes de carbone.

4. Concentré de la revendication 1 où le second composant est sélectionné dans le groupe consistant en pyrrolidones ayant la formule 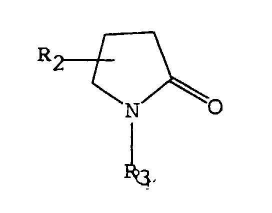
où R₂ est de l'hydrogène ou un alkyle ayant de 6 à 14 atomes de carbone et R₃ est un alkyle ayant de 6 à 14 atomes de carbone à condition qu'au moins l'un de R₂ ou R₃ doit contenir au moins 6 atomes de carbone et la somme des atomes de carbone dans R₂ et R₃ ne peut dépasser 14 ;
alkyl gamma-butyrolactones, alkyl carbonates cycliques, et leurs combinaisons où la portion d'alkyle peut être distribuée en un ou plusieurs sites sur le cycle tant qu'une portion contient au moins 6 atomes de carbone et que le nombre total d'atomes de carbone d'alkyle ne dépasse pas 14.

5. Concentré de la revendication 3, où le premier composant est sélectionné dans le groupe consistant en N-méthylpyrrolidone, carbonate d'éthylène, carbonate de propylène, carbonate de butylène, N,N-diméthylimidazolone, diméthylformamide, diméthylacétamide, diméthylsulfoxyde, et leurs mélanges.

6. Concentré de la revendication 4, où le second composant est sélectionné dans le groupe consistant en N-octylpyrrolidone, N-dodécylpyrrolidone, N-2-éthylhexylpyrrolidone et leurs mélanges.

7. Concentré de la revendication 5, où le premier composant est la N-méthylpyrrolidone.

8. Concentré selon l'une quelconque des revendications précédentes, où la quantité du produit chimique actif pour l'agriculture est de 5% à 60% en poids en se basant sur le poids total de concentré.

9. Concentré selon l'une quelconque des revendications précédentes où le solvant est biodégradable.

10. Concentré selon l'une quelconque des revendications précédentes où la quantité du solvant est dans la gamme de 20 à 90% et la quantité du diluant est dans la gamme de 80 à 10%, chacune de ces quantités étant basée sur le poids total du solvant et du diluant dans le concentré.

11. Concentré selon l'une quelconque des revendications précédentes où le diluant organique est une huile ayant un paramètre de solubilité dispersive fractionnée de plus de 70% et un volume molaire de plus de 90 cm³/mole.

12. Concentré de la revendication 11, où le diluant est sélectionné dans le groupe consistant en huile de soja, huile de pépin de raisin, alcools à chaîne longue, cétones à chaîne longue, esters et éthers à chaîne longue et huiles de pétrole aromatiques.

13. Concentré de la revendication 11, où le diluant est une huile de pétrole aromatique comprenant environ 60% de solvant naphta aromatique lourd et environ 40% d'extractant au solvant de distillat moyen.

14. Concentré selon l'une quelconque des revendications précédentes, où la quantité de l'agent tensioactif est de 1 à 25% en poids en se basant sur le poids total du concentré.

15. Concentré selon l'une quelconque des revendications précédentes, où la concentration du produit chimique actif pour l'agriculture est au-delà de 5% en poids, en se basant sur le poids du concentré total.

16. Concentré selon l'une quelconque des revendications précédentes, où la quantité du produit chimique actif pour l'agriculture est de 5% à 25% en poids en se basant sur le poids total du concentré.

17. Concentré selon l'une quelconque des revendications précédentes, où le produit chimique actif pour l'agriculture est sélectionné dans le groupe consistant en engrais, substances nutritives pour les plantes, agents accélérants la croissance des plantes, herbicides, agents contrôlant la croissance des plantes, insecticides, bactéricides, fongicides, nématocides, défoliants et agents de fumigation.

18. Concentré de la revendication 17, où le produit chimique actif pour l'agriculture est un insecticide sélectionné dans le groupe consistant en composés cyclo, carbamates, dérivés animaux et végétaux, pyréthoïdes synthétiques, composés phénoxy, phosphates organiques, thiophosphates et dithiophosphates.

19. Concentré de la revendication 17, où le produit chimique actif pour l'agriculture est un herbicide sélectionné dans le groupe consistant en composés phénoxy, acide benzoïque substitué, acide acétique substitué, dérivés de l'acide phtalique, dérivés d'aniline, nitriles, amides, acétamides, anilides, carbamates, thiocarbamates, dérivés hétérocycliques azotés, dérivés d'urée et phosphates.

20. Concentré selon la revendication 17 où le composé actif pour l'agriculture est un fongicide.

21. Concentré selon l'une des revendications 1 à 16, où le composé actif pour l'agriculture est un agent de fumigation, un régulateur de croissance, un agent répulsif ou un rodenticide.

22. Concentré selon l'une quelconque des revendications 1 à 17, où le composé actif pour l'agriculture est un pesticide.

23. Composition comprenant le concentré émulsifiable selon l'une quelconque des revendications précédentes et de l'eau où le produit actif pour l'agriculture est présent en une quantité efficacement active pour l'agriculture.

24. Procédé de préparation d'un concentré émulsifiable stable comprenant le mélange d'un produit chimique actif pour l'agriculture qui est sensiblement insoluble dans l'eau avec un agent tensioactif, un diluant organique et un solvant composé de premier et second composants, le second composant étant un solvant hydrophobe ayant une valeur de HLB de 2 à 8 et le premier composant ayant une propriété hydrophile suffisamment élevée et étant présent en une quantité efficace pour solubiliser le produit chimique actif pour l'agriculture dans le concentré et où les facteurs de solvant de Hansen pour les premier et second composants sont :
| Facteur de Hansen | Premier Composant | Second Composant |
|---|---|---|
| Dispersant | 40 - 50% | 56 - 75% |
| Polarité | 25 - 40% | 8 - 24% |
| Liaisons hydrogène | 10 - 30% | 10 - 30% |

25. Procédé de la revendication 24, où le premier composant est sélectionné dans le groupe consistant en des pyrrolidones ayant la formule 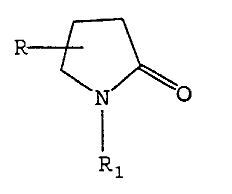 où R est de l'hydrogène ou un alkyle inférieur et R₁ est un alkyle inférieur où alkyle inférieur est un groupe alkyle ayant de 1 à 4 atomes de carbone, des lactones cycliques ; des carbonates cycliques d'alkylènes inférieurs où alkylène inférieur est un groupe alkylène ayant de 1 à 4 atomes de carbone ; alkyle inférieur d'imidazolone, alkylamides inférieurs de l'acide formique et acétique, et alkyl sulfoxydes inférieurs où alkyle inférieur est un groupe alkyle ayant 1 ou 2 atomes de carbone.

26. Procédé de la revendication 24, où le second composant est sélectionné dans le groupe consistant en pyrrolidone ayant la formule 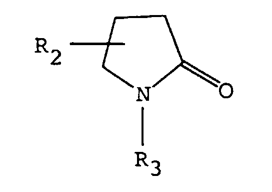
où R₂ est de l'hydrogène ou un alkyle ayant de 6 à 14 atomes de carbone et R₃ est alkyle ayant de 6 à 14 atomes de carbone à condition qu'au moins l'un de R₂ ou R₃ doit contenir au moins 6 atomes de carbone et la somme des atomes de carbone dans R₂ et R₃ ne peut dépasser 14 ;
alkyl gamma-butyrolactones, alkyl carbonates cyliques, et leurs combinaisons, où la portion d'alkyle peut être distribuée en un ou plusieurs sites sur le cycle tant qu'une portion contient au moins 6 atomes de carbone et que le nombre total d'atome de carbone d'alkyle ne dépasse pas 14.

27. Procédé de la revendication 24, où le premier composant est sélectionné dans le groupe consistant en N-méthylpyrrolidone, carbonate d'éthylène, carbonate de propylène, carbonate de butylène, N,N-diméthylimidazolone, diméthylformamide, diméthylacétamide, diméthylsulfoxyde et leurs mélanges.

28. Procédé de la revendication 26, où le second composant est sélectionné dans le groupe consistant en N-octylpyrrolidone, N-dodécylpyrrolidone, N-2-éthylhexylpyrrolidone et leurs mélanges.

29. Procédé selon l'une quelconque des revendications 24 à 28, où la quantité du solvant est dans la gamme de 20 à 90% et la quantité du diluant est dans la gamme de 80 à 10%, chacune de ces quantités étant basée sur le poids total du solvant et du diluant dans le concentré.

30. Procédé de la revendication 29, où le diluant est sélectionné dans le groupe consistant en huile de soja, huile de pépin de raisin, alcools à chaîne longue, cétones à chaîne longue, esters et éthers à chaîne longue, et huiles de pétrole aromatiques.

31. Procédé selon l'une quelconque des revendications 24 à 30, où la quantité de l'agent tensioactif est de 1 à 25% en poids en se basant sur le poids total du concentré.

32. Procédé selon l'une quelconque des revendications 24 à 31, où la quantité du produit chimique actif pour l'agriculture est de 5% à 25% en poids en se basant sur le poids total du concentré.

33. Procédé selon l'une quelconque des revendications 24 à 32, où le produit chimique actif pour l'agriculture est sélectionné dans le groupe consistant en engrais, substances nutritives pour les plantes, agents accélérants la croissance des plantes, herbicides, agents contrôlant la croissance des plantes, insecticides, bactéricides, fongicides, nématocides, défoliants et agents de fumigation.
